# EUROPEAN PATENT SPECIFICATION

(11) **EP 3 006 666 B1**
(45) Date of publication and mention of the grant of the patent: **01.02.2023**
(21) Application number: 14003430.7
(22) Date of filing: 06.10.2014
(51) Int. Cl.: E21B 47/16, G01V 11/00

(54) **Method and apparatus for operatively mounting transducers to pipe**
Verfahren und Vorrichtung zur operativen Montage von Wandlern an Rohren
Procédé et appareil de montage de manière fonctionnelle de transducteurs sur un tubage

(43) Date of publication of application: 13.04.2016
(73) Proprietor: Cold Bore Technology Inc., Langley, British Columbia V2Y 0G9 (CA)
(72) Inventor: LI-Leger, Noah, Surrey, British Columbia V4P 1J9 (CA); Rizun, Peter, White Rock, British Columbia V4B OA3 (CA); Pacurari, Nicolai Calin, Sherwood Park, Alberta TSB 1C9 (CA); Bergmann, Craig Anthony, Edmonton, Alberta T6W OZ3 (CA); Saed, Aryan, Maple Ridge, British Columbia V2W 2C5 (CA)
(74) Representative: Röthinger, Rainer

(56) References cited:
- EP-A1- 1 887 182
- WO-A1-92/02054
- US-A- 3 103 643
- US-A- 4 302 826
- US-A1- 2006 002 232

## Description

### Technical Field

The invention relates to drilling using drill strings comprising pipe, and in particular to a method for mounting one or more transducers to a drilling pipe for acoustic communication along the drilling pipe and an apparatus for mounting one or more transducers to a drilling pipe.

### Background

Wells of the type commonly used for fossil fuel exploration, water well drilling, geothermal energy applications and/or the like are often several kilometers deep. Typically, these wells or "boreholes" are drilled using drilling pipes (typically referred to as "drill strings") assembled from sections (typically referred to as "pipe stands") connected end-to-end by suitable connection joints. Pipe stands may be about 30 to 45 feet long (about 9m to 14m). To form a borehole, the drill string is rotated such that a drill bit attached to its "downhole" (or operative) end bites into the earth. Additional pipe stands are typically added to the "uphole" (or surface) end of the drill string as the borehole deepens.

Drilling fluid, often referred to as "drilling mud" is typically pumped through an axial bore in the drill string from the surface to the downhole end of the drill string. The drilling mud typically exits the drill string at the downhole end and returns to the surface through the space between the drill string and the borehole. The drilling mud may cool and lubricate the drill bit, power the drill bit (e.g. through hydrodynamic pressure), provide a deposit on the borehole wall to seal the formation, and remove debris from the borehole.

There is a general desire to communicate information from a downhole location at or near the end of the drill string (e.g. near the drill bit) to an uphole location (e.g. a surface location at or near the opening of the borehole). Such communication may permit monitoring of one or more sensors at the downhole location and may also permit control of the drilling operation (e.g. steering, drilling fluid pump parameters, rotational speed and/or the like) based on feedback received from such sensors. Such sensors which are referred to as measurement while drilling (MWD) sensors may sense characteristics of the drill string, the drill bit and/or the borehole. Examples of MWD sensor information may include temperature information, pressure information, incline orientation information, azimuthal orientation information, vibration information, drilling torque information and/or the like. In addition to sensor information, it may be desirable to communicate management information from the downhole location to the uphole location. By way of example, such management information may include information related to the sensor information (e.g. the amount sensor data, the type of sensor data, the transmission order of sensor data and/or the like).

One technique which has been proposed for communicating MWD information from a transmitter at a downhole location to a receiver at an uphole location involves acoustic telemetry through the drill string. These techniques comprise communicating via acoustic (or pressure) waves that travel through the drill string (e.g. through the pipe body). There is a general desire to generate, control, receive and/or otherwise create and make use of acoustic waves which may travel within and along such pipes. By way of non-limiting example, such waves can be used to communicate data along drill strings.

The foregoing examples of the related art and limitations related thereto are intended to be illustrative and not exclusive. Other limitations of the related art will become apparent to those of skill in the art upon a reading of the specification and a study of the drawings.

US 3 103 643 A discloses an electromechanical transducer in the form of a drill pipe module comprising two lengths of drill pipe which are bonded together end to end with an acoustically elastic cement and freely vibrated relative to each other at the transmission frequencies of interest by means of a vibrator such as a magnetostrictive, electrostrictive, or like member, which bridges the compliant gap between the lengths of pipe and rigidly connects acoustically thereto near the contiguous and adjoining ends thereof.

US 2006/002232 A1 discloses a piezoelectric vibrator to generate an acoustic signal that is to modulate along a mandrel of a drill string in combination with a backing mass positioned adjacent to the vibrator and restrained from lateral movement relative to the axis of the drill string. The drill string includes an acoustic telemetry transceiver including a piezoelectric transducer stack that transmits telemetry signals in the form of acoustic vibrations in the tubing wall of the drill string. An acoustic telemetry receiver is coupled to a kelly to receive transmitted telemetry signals.

EP 1 887 182 A1 discloses a downhole portion of an acoustic telemetry system which is arranged internal to a tubular drill string, wherein the telemetry system includes thermal compensation material arranged above and below a stack of piezoelectric transducer elements in order to reduce compressive force on the element as temperature increases.

US 4 302 826 A discloses a piezoelectric transducer for transmitting acoustic waves along a drill string. The transducer is efficiently coupled by incorporating a mass-spring-piezoelectric transmitter combination which permits resonant operation in the desired low frequency range.

WO 92/02054 A1 discloses a piezoelectric vibrator device to be placed in a drill string. The vibrator is actuated so that the piezoelectric material generates a rotational force, relative to the longitudinal axis of the drill string to generate torsional waves. The transducer has a free moving end with an attached mass for increasing the kinetic energy applied to the drill string.

### Summary

According to the disclosure, there are provided an apparatus and a method according to the independent claims. Developments are set forth in the dependent claims.

### Brief Description of Drawings

Exemplary embodiments are illustrated in referenced figures of the drawings. It is intended that the embodiments and figures disclosed herein are to be considered illustrative rather than restrictive. In the following, "examples" pertain to principles underlying the claimed subject-matter and/or being useful for understanding the claimed subject-matter, "embodiments" pertain to the claimed subject-matter within the claim scope and "unclaimed examples" pertain to implementations not comprised in the claim scope.
Figure 1 is a cross-sectional view of an apparatus for mounting transducers inside the bore of a sub-pipe in accordance with the embodiment. Figure 1A is a sectional view of the Figure 1 apparatus at A-A. Figure 1B is a sectional view of the Figure 1 apparatus at B-B. Figure 1C is a magnified partial cross-sectional view of a portion of the transducer-holder of the Figure 1 apparatus. Figure 1D is a cross-sectional view of the Figure 1 apparatus with an electronics housing connected thereto.
Figure 2 is an exploded isometric view of the Figure 1 apparatus for mounting transducers inside the bore of a sub-pipe with the sub-pipe, a number of transducer assemblies and a number of features of a number of other components removed for clarity.
Figure 3 is an exploded isometric view of the Figure 1 apparatus for mounting transducers inside the bore of a sub-pipe with a number of features of a number of components and transducer-holding assemblies removed for clarity.
Figure 4 is an exploded cross-sectional view of the Figure 3 apparatus.
Figure 5 is a cross-sectional view of an apparatus for mounting transducers inside the bore of a sub-pipe in accordance with another embodiment. Figure 5A is a sectional view of the Figure 5 apparatus at A-A. Figure 5B is a sectional view of the Figure 5 apparatus at B-B. Figure 5C is a cross-sectional view of the Figure 5 apparatus with an electronics housing connected thereto.
Figure 6 is a cross-sectional view of an apparatus for mounting transducers inside the bore of a sub-pipe according to another embodiment. Figure 6A is a sectional view of the Figure 6 apparatus at A-A.
Figure 7 depicts various circumferential views of non-limiting transducer-holding assembly and feed-through configurations according to an unclaimed example.
Figure 8 is a cross-sectional view of an apparatus for mounting transducers inside the bore of a sub-pipe in accordance with another embodiment. Figure 8A is a sectional view of the Figure 8 apparatus at A-A.
Figure 9 is a cross-sectional view of an apparatus for mounting transducers inside the bore of a sub-pipe in accordance with another embodiment. Figure 9A is a sectional view of the Figure 9 apparatus at A-A.
Figures 10A and 10B depict cross-sectional and plan views of a sub-pipe suitable for use with the apparatus of Figures 1, 5, 6, 8, 9 and 17 according to the embodiment. Figures 10C and 10D depict cross-sectional and plan views of another sub-pipe suitable for use with the apparatus of Figures 1, 5, 6, 8, 9 and 17 according to an unclaimed example.
Figure 11 shows the tension collar according to an example of the Figure 1 apparatus in isolation.
Figures 12A-12D (collectively, Figure 12) shows several views of the feed-through according to an example of the Figure 1 apparatus in isolation.
Figures 13A-13C (collectively, Figure 13) shows various views of a transducer assembly suitable for use with the apparatus of Figures 1, 5, 6, 8, 9 and 17 according to an example.
Figure 14 is an isometric view of the Figure 1 transducer-holding assembly showing a transducer-holder holding a pair of transducer assemblies in accordance with an example.
Figure 15A is an isometric view of the example of the Figure 14 transducer-holder with the transducer assemblies removed for clarity. Figure 15B is an exploded view of the Figure 15A transducer-holder assembly and the Figure 12 feed-through.
Figure 16 is an isometric view of a transducer holder holding a number of transducer assemblies suitable for use with the apparatus of Figure 5 in accordance with an example. Figure 16A is an isometric view of the Figure 16 transducer holder with the transducer assemblies removed for clarity. Figure 16B is a partially cut-away isometric view of the Figure 16 transducer holder holding a number of transducer assembles within a cross-sectioned central component.
Figure 17A is a schematic depiction of the alternating polarity and parallel wiring of transducer elements which may be used in the Figure 13 transducer assembly for transmission of acoustic signals into the sub-pipe according to an example. Figure 17B is a schematic depiction of the aligned polarity and series wiring of transducer elements which may be used in the Figure 13 transducer assembly for receiving acoustic signals from the sub-pipe according to an example.

### Description

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, rather than a restrictive, sense. The same part of the invention appearing in more than one example/embodiment/unclaimed example is designated by the same reference numeral.

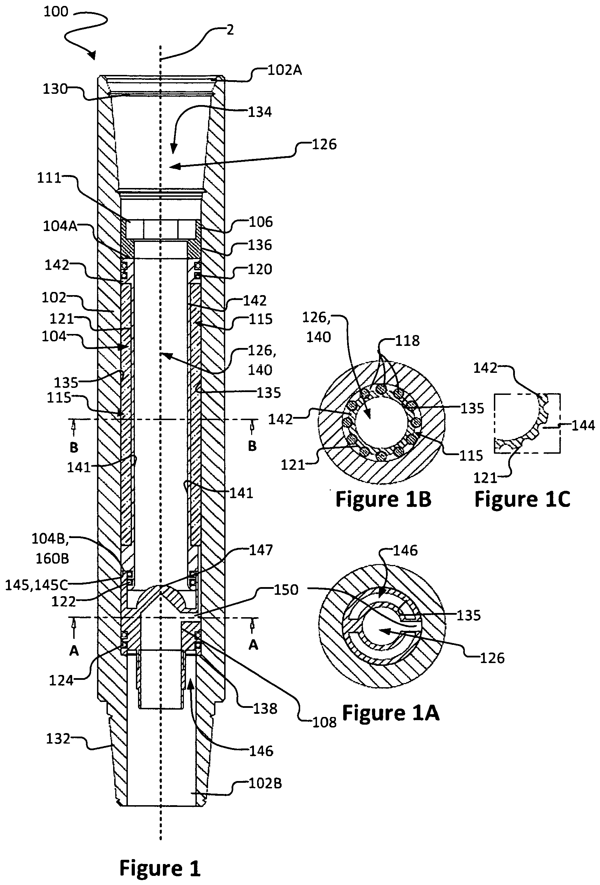

Figures 1A-1D show various views of an apparatus 100 for operatively mounting transducers (e.g. piezoelectric actuators and/or the like) to a sub-pipe (or for brevity, a sub) 102 for acoustic communication according to the embodiment. Sub 102 may be a part of a drill string and may be connected between a pair of pipe stands (not shown) for effecting acoustic communication through the drill string. Sub 102 may additionally or alternative be connected to the end of a monolithic drill pipe (not shown) for effecting acoustic communication through the monolithic drill pipe. When operatively mounted in sub 102, apparatus 100 may create acoustic (i.e. pressure) waves that may be launched into sub 102 and may be communicated from sub 102 to any connected drill string and/or pipe. With suitable modulation, such acoustic waves may be used to provide acoustic communication through sub 102 and any connected drill string and/or pipe. When operatively mounted in sub 102, apparatus 100 may receive acoustic waves from sub 102 and from any connected drill string and/or pipe and may generate corresponding electrical signals. Data may be extracted from such electrical signals via suitable receive circuitry.

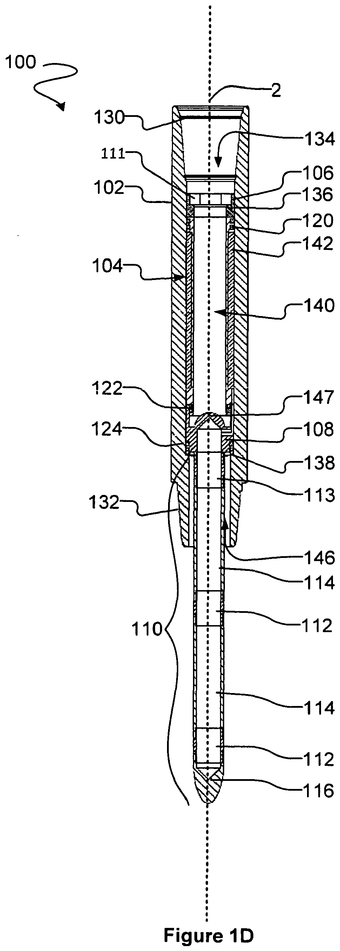

In the embodiment, sub 102 is monolithic. Sub 102 may comprise a standard female rotary (e.g. threaded) connector component 130 at its first end 102A (the "box" end 102A) for connecting to a standard male connector component (not shown) of a pipe stand or other drill string component; and a standard male rotary (e.g. threaded) connector component 132 at its opposing second end 102B (the "pin" through apparatus 100 from a first axial end 102A of sub 102 to a second axial end 102B of sub 102 when transducer-holding assembly 104 is mounted within sub-pipe bore 134. In the embodiment of Figure 1, transducer-holding assembly 104 comprises a transducer-holder bore-defining surface 141 that defines a channel or bore 140, which forms part of channel 126 through apparatus 100 and permits fluid flow through transducer-holding assembly 104 when transducer-holding assembly 104 is mounted within the sub-pipe bore 134.

In the embodiment, bore-defining surface 135 of sub 102 comprises a connector component 136 and an arrest 138. Connector component 136 and arrest 138 of bore-defining surface 135 may be used to operatively mount transducer-holding assembly 104 in sub-pipe bore 134 and may facilitate intimate contact (e.g. acoustic connection) of transducer-holding assembly 104 to sub 102 for acoustic communication along sub 102 and through any connected drill string and/or pipe.

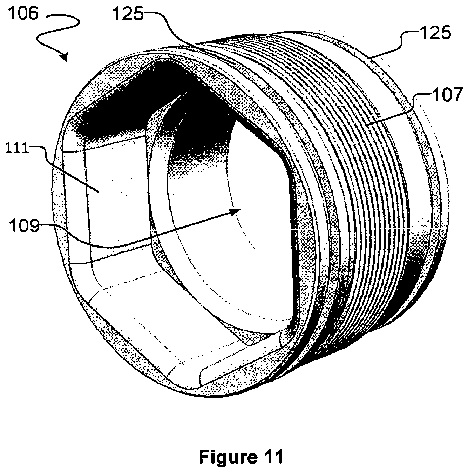

Connector component 136 may be used to connect to a complementary connector component (not shown) on a tension collar portion (not shown) of transducer-holding assembly 104 for connection of transducer-holding assembly 104 to sub 102 within bore 134. In some examples, connector component 136 may be used to connect to a complementary connector component 107 of a separate tension collar 106 (explained in more detail below and best seen in Figure 11) for connection of tension collar 106 to sub 102 within bore 134. When so-connected, tension collar 106 may bear against a first axial end 104A of transducer-holding assembly 104 for indirect connection of transducer-holding assembly 104 to sub 102 through tension collar 106. This direct connection of a tension collar portion of transducer-holding assembly 104 to sub 102 or indirect connection of transducer-holding assembly 104 to sub 102 via separate tension collar 106 may provide intimate contact (e.g. acoustic connection) of transducer-holding assembly 104 to sub 102 for acoustic communication along sub 102 and through any connected drill string and/or pipe. As will be discussed in more detail below, connector component 136 and the complementary connector component of the tension collar portion of transducer-holding assembly 104 and/or the complementary connector component 107 of separate tension collar 106 may provide a connection which facilitates axial movement of the connected transducer-holding assembly 104 and/or the connected tension collar 106 relative to sub 102.

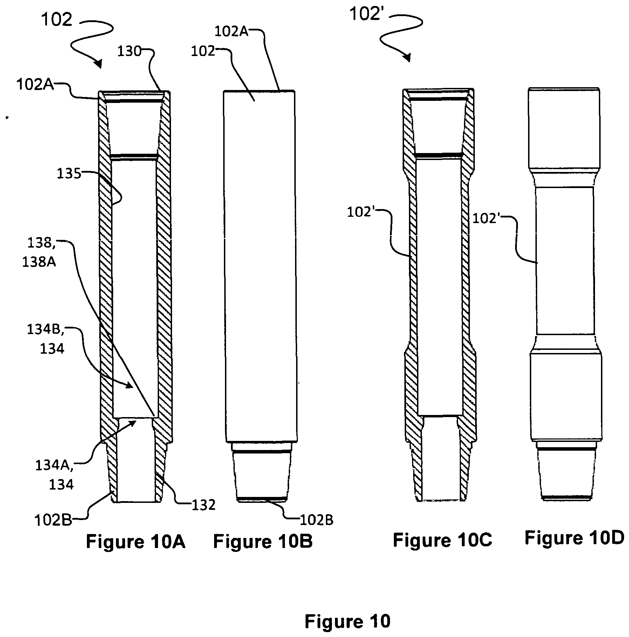

Arrest 138 of bore-defining surface 135 may be shaped to reduce a cross-section area of sub-pipe bore 134 in a region 134A of sub-pipe bore 134 relative to at least one region 134B of bore 134 adjacent to arrest 138. This may be best seen from Figure 10A which shows a cross-section of sub 102 including bore-defining surface 135, arrest 138, reduced-cross-sectional-area region 134A of bore 134 and adjacent (relatively wide-cross-sectional-area) region 134B of bore 134. The relatively wide-cross-sectional-area region 134B of bore 134 may extend all the way to a first axial end 102A of sub 102 to facilitate insertion of transducer-holding assembly 104 into bore 134 from first axial end 102A through wide-cross-sectional-area region 134B.

Arrest 138 stops axial movement of transducer-holding assembly 104 as a feed-through portion (not shown) at a second axial end 104B of transducer-holding assembly 104 bears against arrest 138. (As is the case with the embodiment of Figure 1), arrest 138 stops axial movement of transducer-holding assembly 104 as second axial end 104B of transducer-holding assembly 104 bears against a separate feed-through 108 (explained in more detail below) and feed-through 108 bears against arrest 138.In the embodiment of Figures 1 and 10A, arrest 138 is a lipped arrest comprising an annular, axial-facing bearing surface 138A (Figure 10A) against which the feed through portion at the second axial end 104B of transducer-holding assembly 104 may bear or against which separate feed-through 108 may bear. Arrest 138 may comprise one or more radially inwardly extending protrusions which reduce the cross-section area of bore 134 in reduced cross-section area region 134A and which provide one or more corresponding axial facing bearing surfaces against which the feed through portion at the second axial end 104B of transducer-holding assembly 104 or separate feed-through 108 may bear. Arrest 138 may comprise a threaded arrest which comprises a helical bearing surface against which the feed through portion at the second axial end 104B of transducer-holding assembly 104 or separate feed-through 108 may bear. This direct bearing of the feed through portion at the second axial end 104B of transducer-holding assembly 104 against arrest 138 or indirect bearing of transducer-holding assembly 104 against arrest 138 via separate feed-through 108 may provide intimate contact (e.g. acoustic connection) of transducer-holding assembly 104 to sub 102 for acoustic communication along sub 102 and through any connected drill string and/or pipe.

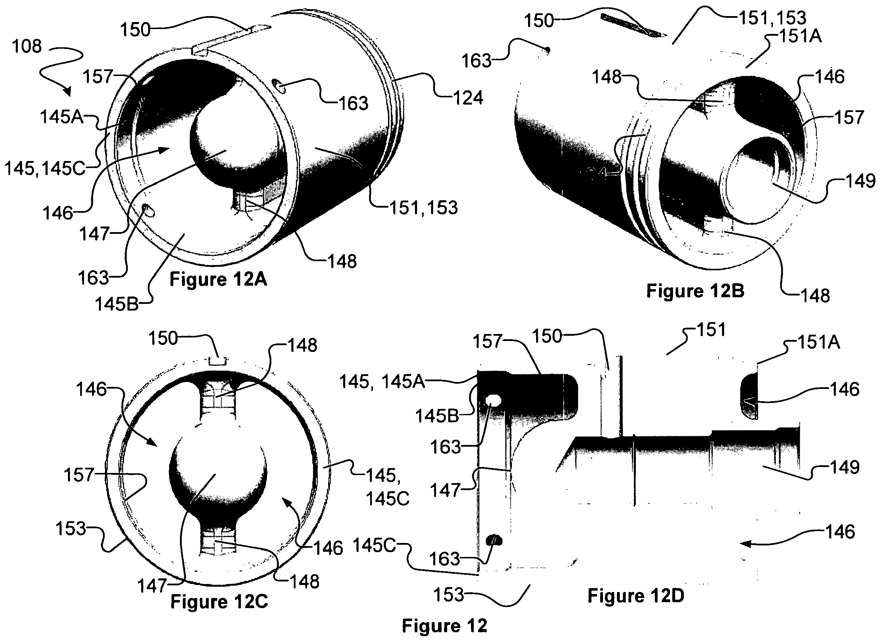

In the embodiment of Figure 1, apparatus 100 comprises a separate feed-through 108 shown best in Figure 12. Feed-through 108 of the Figure 12 example comprises: a transducer-holding assembly engaging portion 145 for engaging transducer-holding assembly 104, an electronics connector portion 149 for connection to an electronics housing 110 (see Figure 1D), a sub-pipe engaging portion 151 for engaging arrest 138 and an axially-extending channel 146 permitting fluid flow therethrough. Transducer-holding assembly engaging portion 145 bears against or otherwise engages transducer-holding assembly 104 and sub-pipe engaging portion 151 bears against sub-pipe 102 to provide acoustic communication between the transducer assemblies supported by transducer-holding assembly 104 and sub-pipe 102 for communication of acoustic signals through any connected drill string and/or pipe.

In the embodiment, where arrest 138 of sub 102 is shaped to reduce the cross-sectional area of bore 134 and comprises an axial-facing bearing surface (e.g. annularly shaped, axial-facing bearing surface 138A of the lipped arrest 138 shown in Figure 10A or some other axial-facing bearing surface(s)), sub-pipe engaging portion 151 of feed-through 108 may be located at a radially outward portion of feed-through 108. Sub-pipe engaging portion 151 of feed-through 108 may comprise a radially outward facing surface 153 for abutting against bore-defining surface 135 of sub 102 and may comprise a complementary axial-facing bearing surface 151A for bearing against the axial-facing bearing surface 138A of arrest 138. In examples where arrest 138 comprises a threaded arrest, sub-pipe engaging portion 151 may comprise complementary threads for engaging the threads of arrest 138. Sub-pipe engaging portion 151 of feed-through may be annular in cross-section, although this is not necessary.

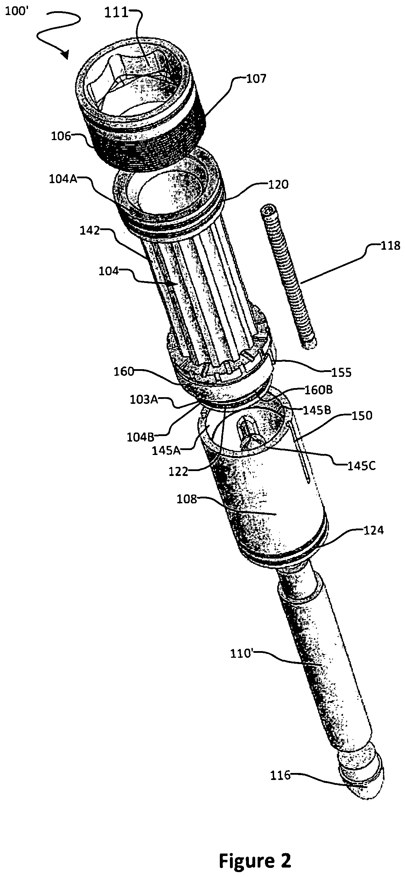

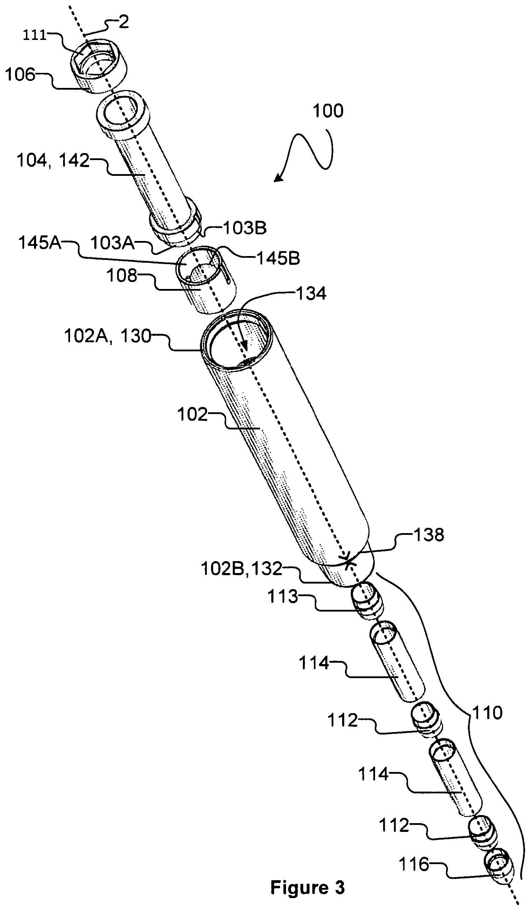

Feed-through 108 of the Figure 12 example comprises an electronic connector portion 149 for connection to an electronics housing 110 (Figure 1D). Electronics housing 110 may be referred to as a barrel housing 110. In the example, connector portion 149 and electronics housing 110 are radially centered about central axis 2 (or are co-axial with central axis 2). This is not necessary. In general, electronic connector portion 149 and electronics housing 110 may be located at other radial locations relative to central axis 2. In the example, a portion of electronics housing 110 (i.e. the portion that connects to feed through 108) is located inside bore 134 of sub 102 and another portion of electronics housing 110 extends axially out of the second end 102A of sub 102. In general, however, electronics housing 110 may be provided with any suitable length desirable to accommodate electronics associated with communication using apparatus 100 (or any other desired electronics). In the examples, electronic connector portion 149 is configured (e.g. sized and/or shaped) to provide a mechanical connection to a complementary connector component 113 at one axial end of electronics housing 110 (see Figures 2 and 3). Electronic connector portion 149 and complementary connector component 113 may comprise threads for connection to one another.

Feed-through 108 may also provide a route for extension of electrical connections (e.g. wires or the like) between electronics housing 110 and transducer-holding assembly 104. In the case of the Figure 12 example, feed-through 108 comprises one or more conduits 150 through which wires and/or the like may extend to electrically connect electronics, power source(s) and/or the like housed in electronics housing 110 to transducer assemblies 118 held in transducer-holding assembly 104. In the Figure 12 example, each conduit 150 extends from connector portion 149 to a radially outward surface 153 of feed-through 108 through a corresponding one of or more of arms 148 and then axially along radially outward surface 153 to the axial end of feed-through 108 proximate transducer-holding assembly 104. Accordingly, wires and/or the like may pass from the electronics housing, through connector components 113, 149 and through conduit 150 to transducer-holding assembly 104. In the embodiment of Figure 1 and the example of Figure 12, feed-through 108 is free to pivot about central axis 2. Accordingly, feed-through can be pivotally adjusted so that conduit 150 may be aligned with a corresponding wiring conduit 155 of transducer-holding assembly 104.

Feed-through 108 is shaped to provide an axially-extending channel 146 for permitting flow of drilling fluid through feed-through 108. In the embodiment of Figure 1 and the example of Figure 12, this axially-extending channel 146 is defined by the components of feed-through 108. Such channel-defining components of feed-through 108 may comprise electronics connection 149, radially inward facing surfaces 157 of sub-pipe engaging portion and arms 148 which extend between electronics connection 149 and sub-pipe engaging portion 151. In the embodiment of Figure 1 and the example of Figure 12, feed-through 108 comprises a plurality (e.g. two) arms 148, but this is not necessary. In some examples, feed through 108 could comprise one, two or more than three arms 148. In the embodiment of Figure 1 and the example of Figure 12, electronics connection 149 comprises a cone-shaped nosing 147 which radially narrows as it extends axially toward transducer-holding assembly 104. Nosing 147 may help to minimize (or at least reduce) disturbance to the flow of drilling fluid through feed-through 108.

In some examples, transducer-holding assembly 104 may comprise an integrally formed feed-through portion (not shown) - i.e. a feed-through portion which is not a separate component from transducer-holding assembly 104. In such examples, the feed-through portion of transducer-holding assembly 104 may comprise or provide features similar to those of feed-through 108 described herein, except where such features relate to the engagement of feed-through 108 with transducer-holding assembly 104 or the bearing of feed-through 108 and transducer-holding assembly 104 against one another. It will be appreciated that such features of engagement or bearing are not applicable where the feed-through is integrally formed with transducer-holding assembly 104.

Apparatus 100 of the Figure 1 embodiment also comprises a separate tension collar 106 (also referred to as a tensioning nut 106) which is shown best in Figure 11. Tension collar 106 of the illustrated example comprises a connector component 107 for connection to complementary connector component 136 of bore-defining surface 135 of sub 102. The connection between connector components 107, 136 may permit axial adjustment of the position of tension collar 106 relative to sub 102 which may in turn permit adjustment of the force against which tension collar 106 bears against the first axial end 104A of transducer holding assembly 104. In the particular case of the embodiment of Figure 1, connector components 107, 136 comprise threads (see Figures 2 and 11) which provide helical bearing surfaces as between tension collar 106 and sub 102. Note, for clarity, the threads of connector component 136 are not expressly shown in some of the drawings. In some examples, tension collar 106 may comprise one or more pressure bearing O-rings 125 to provide seals that help to prevent drilling fluid from entering the connection between connector components 136, 107.

Tension collar 106 of the illustrated example may also comprise a tool-engaging portion 111 for engaging a corresponding tool (not shown) which may permit rotational adjustment of tension collar 106. In the illustrated example, tool-engaging portion 111 comprises a female tool-engaging portion (e.g. a hex-shaped socket) 111 for receiving a corresponding male tool bit (e.g. a hex-shaped tool bit). More particularly, when tension collar 106 is located in bore 134 of sub 102, a tool may be extended into bore 134 (e.g. through first axial end 102A of sub 102) such that a bit of the tool engages tool-engaging portion 111 and may be used to rotate tension collar 106. In some examples, tool-engaging portion 111 is not required. In some examples, other shapes and/or techniques may be used for gripping and/or otherwise engaging and/or rotating tension collar 106.

In the illustrated example, where tension collar 106 comprises threads 107 that are threadably connected to the threaded connector component 136 of bore-defining surface 135, suitable rotation of tension collar 106 may cause tension collar 106 to move axially relative to sub 102 (e.g. toward or away from the transducer-holding assembly 104). Control of this movement may in turn permit control over the axial forces by which tension collar 106 bears on first axial end 102A of transducer-holding assembly 104, the axial forces by which transducer-holding assembly 104 bears against feed-through 108 and feed-though 108 bears against arrest 138 and/or the corresponding compressive forces by which transducer-holding assembly 104 is axially compressed between tension collar 106 and feed-through 108 (which in turn bears against arrest 138). As explained in more detail below, through these abutting and threaded connections, transducer-holding assembly 104 (via tension collar 106 and feed-through 108) may be mounted in the bore 134 of sub 102 in a compressed state and in intimate contact for acoustic coupling with sub 102.

Tension collar 106 provides one or more axially extending channels to permit axial fluid flow (e.g. of drilling fluid) therethrough. In the embodiment of Figure 1 and the example of Figure 11, tension collar 106 comprises a centrally located channel 109. Channel 109 through tension collar 106 comprises part of channel 126 through apparatus 100 and permits the flow of drilling fluid between the bore 140 of transducer-holding assembly 104 to a portion of sub-pipe bore 134 downstream of transducer-holding assembly 104 and to an adjacent pipe stand (not shown).

In some examples, transducer-holding assembly 104 may comprise an integrally formed tension collar portion (not shown) - i.e. a tension collar portion which is not a separate component from transducer-holding assembly 104. In such examples, the tension collar portion of transducer-holding assembly 104 may comprise or provide features similar to those of tension collar 106 described herein, except where such features relate to the engagement of tension collar 106 with transducer-holding assembly 104 or the bearing of tension collar 106 and transducer-holding assembly 104 against one another. It will be appreciated that such features of engagement or bearing are not applicable where the tension collar portion is integrally formed with transducer-holding assembly 104.

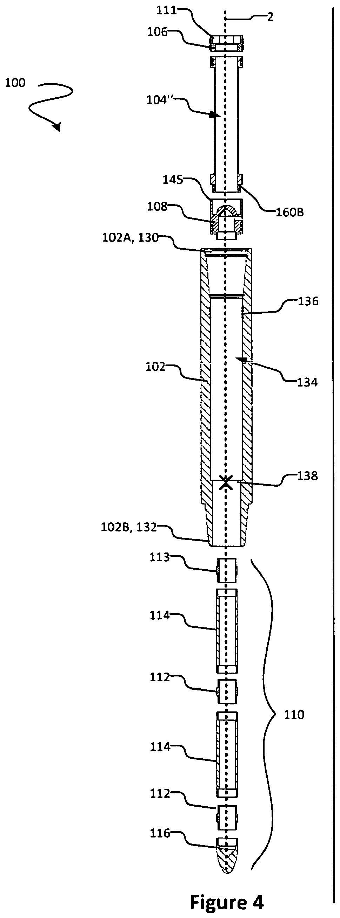

Referring to Figures 1-4, apparatus 100 of the embodiment is assembled by inserting feed-through 108, transducer-holding assembly 104 and tension collar 106 into bore 134 of sub 120 from first axial end 102A of bore 102. More particularly, feed-through 108 may be inserted first into bore 134 of sub 102 from first axial end 102A, such that the feed-through 108 bears (e.g. abuts against) arrest 138 of bore-defining surface 135. Axial-facing bearing surface 151A of sub-pipe engaging portion 151 may abut against complementary axial-facing bearing surface 138A of arrest 138. After feed-through 108, transducer-holding assembly 104 may then be inserted into bore 134 from first end 102A of sub 102. Second axial end 104B of transducer-holding assembly 104 may then engage or otherwise bear against transducer-holding assembly engaging portion 145 of feed-through 108 for application of bearing force and corresponding acoustic communication between transducer-holding assembly 104 and feed-through 108.

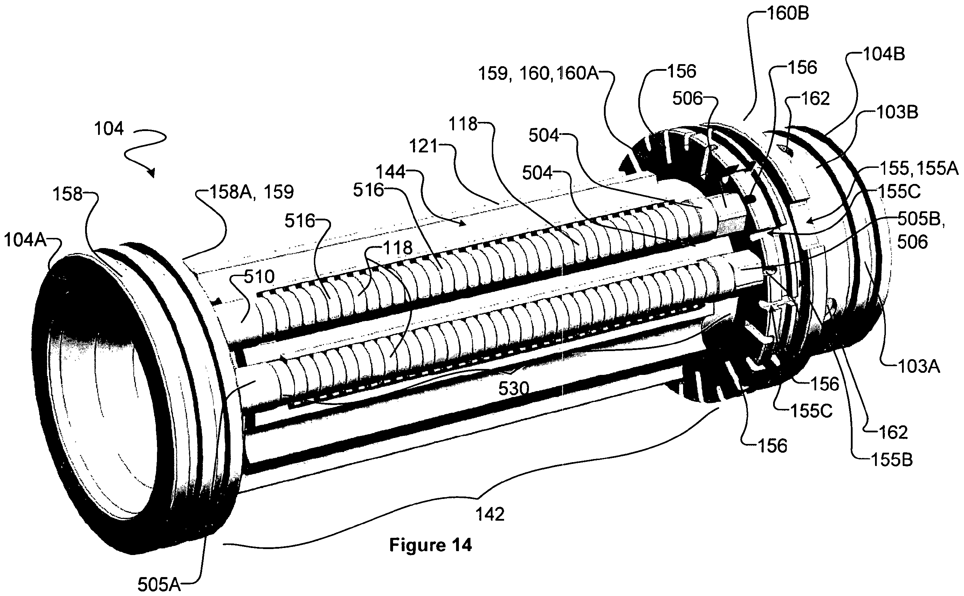

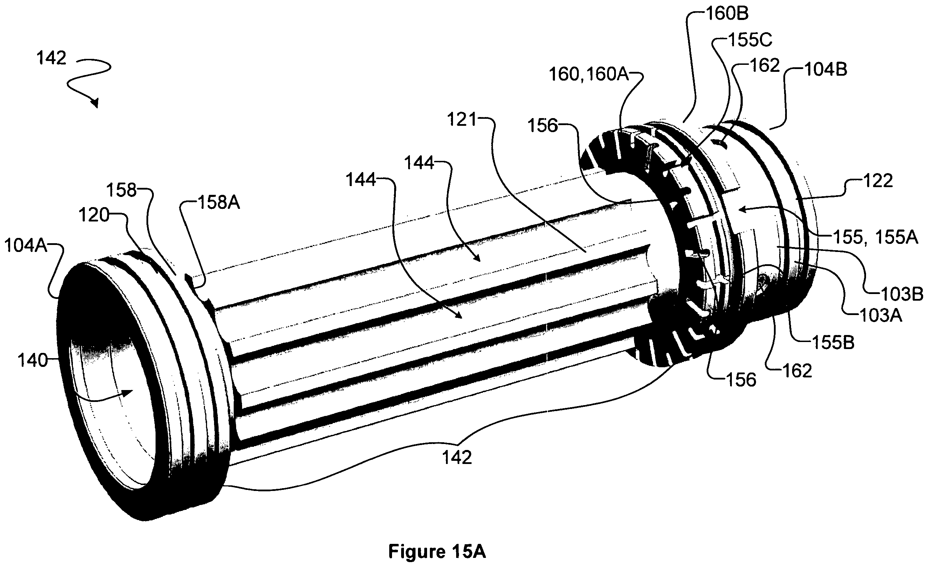

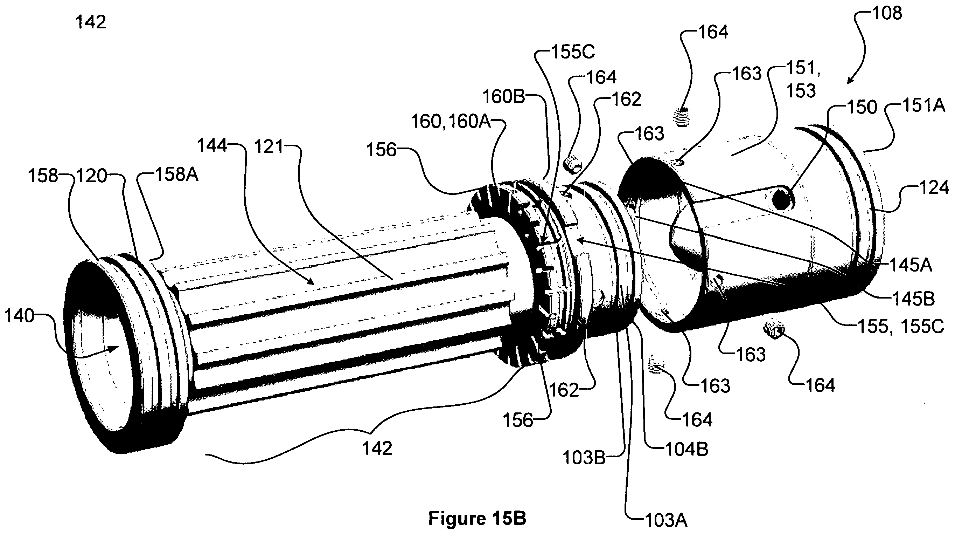

In the example, second end 104B of transducer-holding assembly 104 and transducer-holding assembly engaging portion 145 of feed-through 108 comprise optional complementary engaging features which help them to engage or otherwise bear against one another. More particularly, in the example (as shown best in Figure 12), transducer-holding assembly engaging portion 145 of feed-through 108 comprises a recessed surface 145A (where sub-pipe engaging portion 151 is relatively radially thin) and one or more corresponding shoulders 145B (where sub-pipe engaging portion 151 is relatively radially thick). Similarly, as shown best in Figures 2-4, 14, 15A and 15B, second end 104B of transducer-holding assembly 104 may comprise a recessed surface region 103A (where the radial location (relative to central axis 2) of the radially outward facing surface of transducer-holding assembly 104 is relatively small) and a corresponding shoulder 103B (where the radial location (relative to central axis 2) of the radially outward facing surface of transducer-holding assembly 104 is relatively large) which are complementary to recessed region 145A and shoulder 145B of transducer-holding assembly engaging portion 145. Recessed surface region 103A and shoulder 103B of transducer-holding assembly 104 may be best seen in Figures 14 and 15. Together, recessed regions 145A, 103A and shoulders 145B, 103B help to engage second end 104B of transducer-holding assembly 104 to transducer-holding assembly engaging portion 145 of feed-through 108 to permit communication of acoustic signals therebetween. In the example, transducer-holding assembly engaging portion 145 of feed-through 108 also comprises an axially facing end surface 145C and second end 104B of transducer-holding assembly 104 comprises a first axially facing surface 160B of second flange 160. In the example, axially facing end surface 145C of feed-through 108 abuts and bears against corresponding axially facing surface 160C of second end 104B of transducer-holding assembly 104 to help engage transducer-holding assembly engaging portion 145 of feed-through 108 to second end 104B of transducer-holding assembly 104 and to permit communication of acoustic signals therebetween.

In some examples, feed-through 108 may comprise one or more alignment apertures 163 and transducer-holding assembly 104 may comprise one or more complementary alignment recesses 162. Set screws 164 or other suitable fasteners may project radially inwardly through alignment apertures 163 and into alignment recesses 162 to maintain an axial alignment of transducer-holding assembly 104 and feed through 108 during assembly and operation of apparatus 100. In particular, alignment recesses 162 and apertures 163 and set screws 164 aid in maintaining axial alignment of conduit 150 of feed-through 108 with wiring conduit 155 of transducer-holding assembly 104 for protection of wires/electrical connectors that run therethrough. In some examples, other types of fasteners could be used to maintain this axial alignment. In some examples, other engaging features may be provided to help second axial end 104B of transducer-holding assembly 104 to engage or otherwise bear against transducer-holding assembly engaging portion 145 of feed-through 108 for application of bearing force and corresponding acoustic communication between transducer-holding assembly 104 and feed-through 108. In some examples, such engaging features are not necessary.

After insertion of transducer-holding assembly 104, tension collar 106 may be inserted into bore 134 through first axial end 102A of sub 102. As discussed above, connector component 107 of tension collar 106 may then be connected to complementary connector component 136 of bore-defining surface 135 of sub 102 such that tension collar 106 abuts or otherwise bears against first axial end 104A of transducer-holding assembly 104 for application of bearing force and corresponding acoustic communication between transducer-holding assembly 104 and tension collar 106. The connection between tension collar 106 and bore-defining surface 135 may then be adjusted to move tension collar 106 axially in bore 134 relative to sub 102. In the illustrated example, where connector components 107, 136 comprise complementary threads, this axial adjustment of the position of tension collar 106 relative to sub 102 may be accomplished by rotation of tension collar 106 about central axis 2.

As discussed above, axial adjustment of the position of tension collar 106 relative to sub 102 can be used to control any one or more of: the force by which tension collar 106 bears against first axial end 104 of transducer-holding assembly 104; the force by which transducer-holding assembly engaging portion 145 of feed-through 108 bears against second axial end 104B of transducer-holding assembly 104; the force by which feed-through 108 bears against arrest 138 of sub 102; and the force by which transducer-holding assembly 104 is compressed between tension collar 106 and feed-through 108. Control of these forces may be used to provide intimate contact between the corresponding components and corresponding acoustic communication between the transducer assemblies supported by transducer-holding assembly 104 and sub-pipe 102 for communication of acoustic signals through any connected drill string and/or pipe. In some particular non-limiting examples, tension collar 106 may be tightened by rotation at a torque of 250 ft-lbs (+/- 10%) to provide approximately 1000lbs of axial compression to transducer-holding assembly. In some examples, this torque range is in a range of 100-500 ft-lbs. In some examples, this compression is in a range of 500-2000lbs. In some examples, the compression may be sufficient to maintain intimate acoustic contact between a transducer-holding assembly 104 and sub 102 throughout a temperature range of 0°C to +175°C and to maintain intimate acoustic contact between transducer-holding assembly 104 and sub 102 when transducer assemblies 118 held by transducer-holding assembly 104 expand and contract.

Apparatus 100 may conveniently, but not necessarily, comprise a plurality of pressure bearing O-rings to help provide seals that may be sufficient to prevent drilling fluid from entering the transducer-holding assembly 104 between abutting components. In the Figure 1 embodiment (as shown best in Figures 1 and 2), a plurality of pressure bearing O-rings (e.g. Viton^{™} O-rings and/or the like) 120, 122 are mounted within corresponding circumferential recesses in the radially outward facing surfaces of transducer-holding assembly 104. Similar O-rings 124 may be mounted within corresponding circumferential recesses in the radially outward facing surface of feed-through 108. These O-rings 120, 122, 124 may provide seals between transducer-holding assembly 104 and bore-defining surface 135 of sub 102 (O-rings 120), between transducer-holding assembly 104 and feed-through 108 (O-rings 122) and between feed-through 108 and bore-defining surface 135 of sub 102 (O-rings 124). These seals may be sufficient to prevent drilling fluid from entering the cavity 115 where transducer assemblies 118 are housed between transducer holder 142 of transducer-holding assembly 104 and electronics housing 110. In an example, a plurality of each of O-rings 120, 122, 124 are provided to provide more robust seals, although this is not necessary.

We now turn to the description of transducer-holding assembly 104. Transducer-holding assembly 104 may comprise transducer holder 142 and one or more transducer assemblies 118. Figure 14 shows more detail of the transducer-holding assembly 104 of the Figure 1 embodiment. For clarity, only two transducer assemblies 118 are shown in Figure 14. Figure 15 shows transducer holder 142 of the Figure 1 embodiment without transducer assemblies 118. As explained in more detail below, transducer assemblies 118 according to particular examples may each comprise one or more suitable transducers or actuators (e.g. piezoelectric transducers/actuators, magnetostrictive transducers/actuators, electromechanical transducers/actuators and/or the like). Transducer assemblies 118 may be electronically controlled (e.g. by suitable electronics contained in electronics housing 110) to change their shape or to otherwise move. Such shape changes or other movement of transducer-assemblies 118 may be acoustically communicated to transducer holder 142 which is in turn acoustically coupled to sub 102 (as described above - e.g. through tension collar 106 and feed-through 108) for acoustic communication of the shape changes or movement of transducer assemblies 118 into sub 102 and through sub 102 to any connected drill string and/or pipe. It will be appreciated that such shape changes or movements of transducer assemblies can be suitably modulated for acoustic communication through sub 102 to any connected drill string and/or pipe.

In the Figure 1 embodiment, when transducer-holder 142 is inserted into bore 134 of sub 102, transducer holder 142 together with sub 102 define a cavity 115 for housing a plurality of transducer assemblies 118. Cavity 115 of the Figure 1 embodiment is best shown in Figure 1B. Cavity 115 of the Figure 1 embodiment may have a generally annular cross-sectional shape which may be defined (in radial directions) between a radial outward surface 121 of transducer holder 142 and bore-defining surface 135 of sub 102 and which may be defined (in axial directions) by the first and second axial-facing flange surfaces 158A, 160A of first and second flanges 158, 160 of transducer holder 142 (see Figures 14 and 15). In some examples, air gaps in cavity 115 may be filled with a high temperature potting compounding such as Sylgard^{™} (manufactured by Dow Corning) and/or the like.

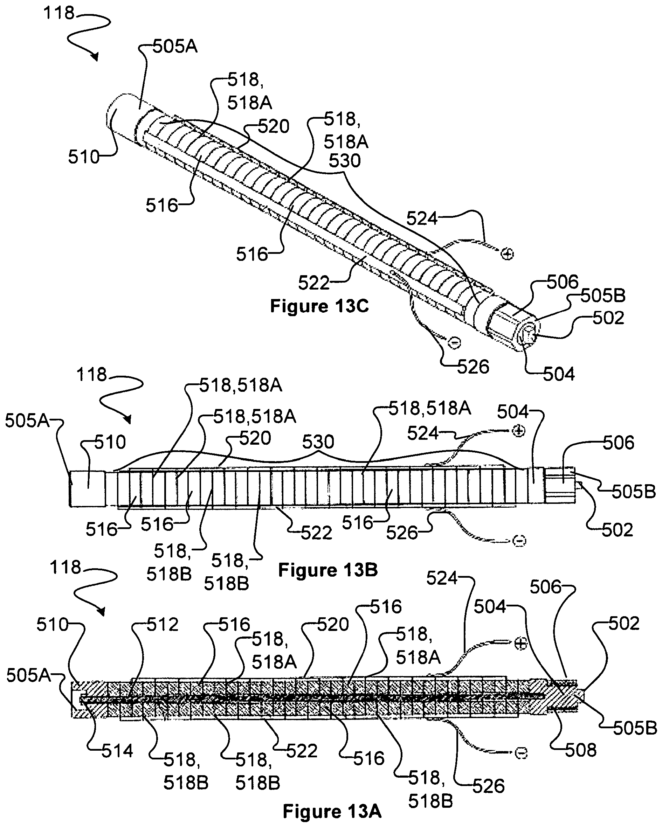

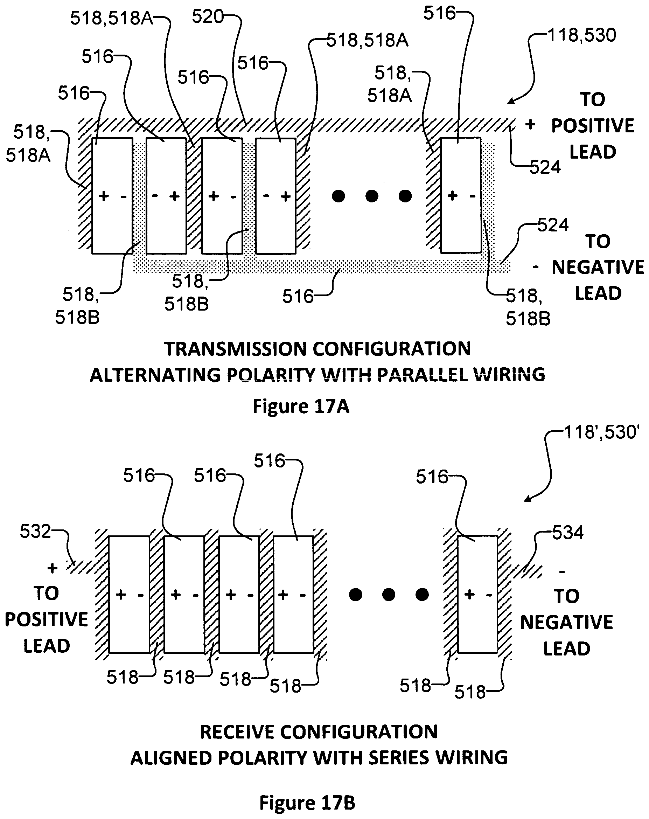

Figure 13 shows various views of a transducer assembly 118 according to an example. Transducer assembly 118 may be used to provide each of transducer assemblies 118 of the Figure 1 embodiment. Figure 14 shows a transducer assembly 104 comprising transducer assemblies 118, two of which are shown in Figure 14. Figure 17A is a schematic depiction of a transducer assembly 118 showing the alternating polarity and parallel wiring of transducer elements 516 which may be used in the Figure 13 transducer assembly 118 for transmission of acoustic signals into sub 102 according to an example. Figure 17B is a schematic depiction of transducer assembly 118' showing the aligned polarity and series wiring of transducer elements 516 which may be used for receiving acoustic signals from sub 102 according to an example.

Transducer assembly 118 of the Figure 13 example comprises a plurality of transducers elements 516, and a pair of complementary (e.g. male and female) threaded members 504, 506 that are generally axially aligned. The axial alignment of transducer assembly 118 and its components may be best seen in Figure 14. In the example of Figures 13 and 14, the plurality of transducer elements 516 provides a piezoelectric stack 530 and each individual transducer element 516 comprises a piezoelectric transducer element 516. Piezoelectric transducer elements 516 may comprise piezoelectric actuators (e.g. piezoelectric ceramic discs or piezoelectric annular shaped members) which are configured to respond to electrical stimuli (e.g. applied electric field) by deformation (e.g. stretching and/or contracting) in axial direction(s). Piezoelectric transducer elements 516 are also responsive to applied forces (e.g. compressive force and/or expansion force) by generating corresponding electrical signals. In the Figure 13 example, the pair of threaded members 504, 506 comprises a male threaded member (e.g. a bolt) 504 and a female threaded member (e.g. a nut) 506.

In the Figure 13 example, piezoelectric transducer elements 516 are axially aligned with one another to provide piezoelectric stack 530 and piezoelectric stack 530 is positioned between cap 510 at one axial end 505B of transducer assembly 118 and threaded members 504, 506 at the opposing axial end 505A of transducer assembly 118. In some examples, one of the pair of threaded members 504, 506 comprises key-shaped protrusion or a protrusion-receiving slot. In the examples, male threaded member 504 comprises an axially extending protrusion (also referred to as a key) 502, which (as explained in more detail below) may extend axially into an axially recessed slot (also referred to as a recess) 156 on a flange 158, 160 of transducer holder 142. In some examples, cap 510 may comprise a similar axially extending protrusion or a protrusion-receiving slot.

The axial length of transducer assembly 118 may be adjusted by relative rotation of the pair of threaded members 504, 506. In the examples, one of threaded members 504, 506 (e.g. male threaded member 504 in the case of the example) is connected to cap 510 at the opposing axial end 505A of piezoelectric stack 530 or is otherwise connected to piezoelectric stack 530, such that when the other one of threaded members 504, 506 (e.g. female threaded member 506 in the case of the example) is rotated, the rotated one of the threaded members 504, 506 moves axially relative to the connected one of the threaded members 504, 506. In the case of the example, when female threaded member 506 rotates relative to male threaded member 054, female threaded member 540 moves axially along shank 508 of male threaded member 504. This relative rotation of threaded members 504, 506 may extend or reduce the axial length of transducer assembly 118. In the case of the example, female threaded member 506 may move relative to male threaded member 504 to extend or reduce the axial length of transducer assembly 118 (e.g. where an axial end of female threaded member 506 provides axial end 505B of transducer assembly 118 and an opposing axial end of cap 510 is the opposing axial end 505A of transducer assembly 118). In some examples, the configuration of female threaded member 506 and male threaded member 504 may be reversed. In such examples, female threaded member 506 is connected to cap 510 at the opposing axial end of piezoelectric stack 530 or is otherwise connected to piezoelectric stack 530, such that as male threaded member 506 is rotated relative to female threaded member 506, male threaded member 506 extends or reduces the axial length of transducer assembly 118 (e.g. where an axial end of male threaded member 504 is axial end 505B of transducer assembly 118 and an opposing axial end of cap 510 is the opposing axial end 505A of transducer assembly 118).

Transducer assembly 118 may comprise a rod 512 which connects one of threaded members 504, 506 to cap 510. Rod 512 may be fabricated from and/or coated with an electrically insulating material. In the example, rod 512 connects cap 510 to male threaded member 504. In some examples, however, rod 512 could connect cap 510 to female threaded member 506 as described above. Rod 512 may be connected to cap 510 and/or to the one of the threaded members 504, 506 by any suitable connections (e.g. threaded connection, welded connections, pressure fit connections and/or the like). In the example, rod 512 is connected to cap 510 at threaded connection 514. In some examples, rod 512 may be integrally formed with cap 510 and/or one of threaded members 504, 506. Rod 512 may also provide an aid for aligning and/or stacking individual annular shaped piezoelectric transducer elements 516 and annular shaped electrode shims (e.g. electrode washers) 518. That is, rod 512 may project through the apertures of annular shaped piezoelectric transducer elements 516 and annular shaped electrode washers 518 before connection of one of cap 510 and one of threaded members 504, 506 to rod 512 and then once annular shaped piezoelectric transducer elements 516 and annular shaped electrode washers 518 are mounted on rod 512 (e.g. by projection of rod 512 through their apertures), the other one cap 510 and one of threaded members 504, 506 may be connected to rod 512 to form transducer assembly 118. In this manner, the parts of transducer assembly 118 may be maintained in axial alignment during assembly of apparatus 100. The axial length of transducer assembly 118 and/or the relative positions of threaded members 504, 506 may be adjusted once transducer assembly 118 is mounted in transducer holder 172, as discussed below, to achieve a desired level of pre-compression of transducer assembly 118 so that transducer assembly 118 behaves as expected in response to electrical stimulation and/or external forces.

Transducer assembly 118 of the Figure 13 example is configured for use to transmit acoustic signals into sub 102 in response to electrical stimulation (e.g. from a suitable driver circuit (not shown)). In particular examples, transducer assembly 118 may be configured for transmission of acoustic signals into sub 102 by alternating the polarity of each adjacent transducer element 516 and by wiring transducer elements 516 in parallel as shown in Figure 17A. It can be seen from Figure 17A that each adjacent pair of transducer elements 516 is assembled into stack 530 with alternating polarity orientation - i.e. adjacent transducer elements 516 are oriented with positive polarity to positive polarity and negative polarity to negative polarity. In some examples, additional annular shaped grounding and or cooling washers (not shown) may be provided within each piezoelectric stack 530 (e.g. between axially adjacent piezoelectric transducer elements 516). In some examples, additional annular shaped temperature compensation washers (not shown) comprising temperature expansion compensating material, such as brass and/or the like, may be provided within each piezoelectric stack 530 (e.g. between axially adjacent piezoelectric transducer elements 516). For the purposes of interpreting transducer assemblies 118 and their components, the term "annular" and similar terms should be interpreted broadly. Specifically, the term "annular" in relation to transducer elements 516, electrode washers 518, grounding washers, cooling washers and/or temperature compensating washers is not limited to a shape having a circular perimeter. These components could have perimeters with other shapes (e.g. ellipsoid, polygonal and/or the like). Further, while these components are apertured, the shape of their apertures need not be circular and could have other shapes (e.g. ellipsoid, polygonal and/or the like).

In the example of Figure 13, annular shaped electrode washers 518 are located in piezoelectric stack 530 (e.g. in axial alignment with piezoelectric transducer elements 516 and, in some examples, axially aligned on rod 512) between axially adjacent pairs of piezoelectric transducer elements 516. In the example of Figures 13 and 17A, where transducer assembly 118 is configured for transmission of acoustic signals into sub 102, positive polarity electrode washers 518A (e.g. electrode washers 518A on positive axial sides of piezoelectric transducer elements 516) may be soldered (or otherwise electrically connected) to a first (positive) runner 520. A positive electrical lead (e.g. a positive connecting wire) 524 may be soldered (or otherwise electrically connected) to runner 520. Negative polarity electrode washers 518B (e.g. electrode washers 518B on negative axial sides of piezoelectric transducer elements 516) may be soldered (or otherwise electrically connected) to a second (negative) runner 522 (see Figure 13). A negative electrical lead (e.g. a negative connecting wire) 526 may be soldered (or otherwise electrically connected) to runner 522. Positive and negative electrical leads (e.g. wires) 524, 526 may be routed to electronics housing 110 through feed-through 108 as described elsewhere in this disclosure. Electronics housing 110 may be provided with (e.g. may contain) suitable drive circuitry (not shown) for providing suitable electrical stimulation signals on leads 524, 526. Data may be modulated into or otherwise carried by such electrical signals and, when transducer elements 516 and transducer assembly 118 deform in response to such data, such data may be acoustically transmitted into sub 102 via acoustic communication between transducer elements 516, transducer assemblies 118, transducer-holding assembly 104 and sub 102.

It will be appreciated that transducer elements 516 are not only responsive to electrical stimuli (e.g. by deformation), but may also be responsive to externally applied forces by generating corresponding electrical signals. This feature of transducer elements 516 can be used to provide transducer assemblies configured to receive acoustic signals and to generate corresponding electrical signals. Figure 17B is a schematic depiction of transducer assembly 118' configured for use to receive an acoustic signal from sub 102 and to generate corresponding electrical signals according to an example. In many respects, receive-configured transducer assembly 118' is substantially similar to transducer assembly 118 described elsewhere in this disclosure. Except where the context dictates otherwise, references to transducer assembly 118 in this disclosure should be understood to include the additional or alternative possibility of receive-configured transducer assembly 118'. Except where the context dictates otherwise, receive-configured transducer assembly 118' may comprise features, alternative features and modifications that are similar to those of transducer assembly described elsewhere herein.

Receive-configured transducer assembly 118' may be configured for receiving acoustic signals from sub 102 by aligning the polarity of each adjacent transducer element 516 and by wiring transducer elements 516 in series as shown in Figure 17B. It can be seen from Figure 17B that each adjacent pair of transducer elements 516 is assembled into stack 530' with aligned polarity orientation - i.e. adjacent transducer elements 516 are oriented with positive polarity to negative polarity and negative polarity to positive polarity. In the example, annular shaped electrode washers 518 are located in piezoelectric stack 530' (e.g. in axial alignment with piezoelectric transducer elements 516 and, in some examples, axially aligned on rod 512) between axially adjacent pairs of piezoelectric transducer elements 516. In some examples of transducer assembly 118' and/or transducer stack 530', electrode washers 118 may not be required. In the example of Figure 17B, where transducer assembly 118' is configured for receiving acoustic signals from sub 102, electrode washers 118 connect adjacent transducer elements 516 to one another in series, such that all of the transducer elements 516 n transducer stack 530' are electrically connected in series between positive lead 532 and negative lead 534. Positive and negative leads 532, 534 (e.g. wires) may be routed to electronics housing 110 through feed-through 108 as described elsewhere in this disclosure. Electronics housing 110 may be provided with (e.g. may contain suitable receiver circuitry (not shown) for receiving suitable electrical signals from leads 532, 534. Where data is acoustically transmitted through sub 102 (e.g. through a pipe string from an uphole transmitter), such acoustically transmitted data may be acoustically communicated via sub 102, transducer-holding assembly 104, transducer assemblies 118' and transducer elements 516 and may be represented in the electrical signals on leads 532, 534. Such data may be extracted from the these electrical signals by the receive circuitry.

Returning now to the description of transducer-holding assembly 104, we next focus on transducer holder 142 (also referred to as a mule or mandrel) which is shown best in Figures 14 and 15. Transducer holder 142 may provide the general shape of transducer-holding assembly 104 including first and second axial ends 104A, 104B and recessed regions 103A and shoulder 103B of second axial end 104B. Transducer holder 142 comprises one or more transducer mounting features 159 for mounting the one or more transducer assemblies 118 to transducer holder 142. In the example, transducer holder 142 provides one or more wiring conduits 155 (see Figures 14, 15A and 15B) for passing electrical leads (e.g. wires) that connect transducer assemblies 118 mounted in transducer holder 142 to electronics housed in electronics housing 110 via conduit 150 of feed-through 108. In the example, wiring conduit 155 comprises a principal conduit notch 155A that accepts electrical leads (e.g. wires) from electronics housing 110 (via conduit 150 of feed-through 108 (see Figure 12)) and leads to circumferential conduit channel 155B through which wires can extend until they reach a suitable axially extending conduit channel 155C through which wires can run to their corresponding transducer assembly 118. In the example, one axially extending conduit channel 155C is provided between each pair of transducer assemblies, although this is not necessary. It may be desirable to align transducer-holding assembly 104 when it is inserted into bore 134 of sub 102 so that wiring conduit 155 is aligned with conduit 150 of feed-through 108. In some examples, this alignment may be maintained by set screws 164 (or other suitable fasteners), which may project radially inwardly through alignment apertures 163 (in feed-through 108) and into radially outwardly opening alignment recesses 162 (see Figure 15B).

In the example, transducer mounting features 159 are provided by first and second flanges 158, 160 of transducer holder 142. More particularly, first and second radially extending and axially facing surfaces 158A, 160A of first and second flanges 158, 160 hold the axial ends 505A, 505B of transducer assemblies 118. A friction or compression fit may be used to hold transducer assemblies 118 between axially facing flange surfaces 158A, 160A. In the embodiment of Figure 1 and the example of Figure 14, first flange surface 158A extends generally radially and faces generally toward second end 102B of sub 102 for a friction or compression fit to cap 510 at first axial end 505A of transducer assembly 118 and second flange surface 160A extends generally radially and faces generally toward first end 102A of sub 102 for a friction or compression fit to one or more of threaded members 504, 506 at second axial end 505B of transducer assembly 118. As shown in Figure 1B a plurality (e.g. 12) of transducers assemblies 118 may be evenly azimuthally (e.g. circumferentially) distributed within transducer holder 142 about central axis 2.

The portion of radially outward surface 121 of transducer holder 142 that extends between first and second flange surfaces 158A, 160A may, in some examples, comprise a plurality of concavities or recesses 144 shaped for accommodating corresponding portions of corresponding transducer assemblies 118, as shown in Figures 1C and 14. In the embodiment of Figure 1 and the example of Figures 14 and 15, concavities 144 extend axially between first and second flange surfaces 158A, 160A and open radially outwardly. In some examples, concavities (similar to concavities 144) may be provided on a radially inwardly facing surface of the transducer holder and could extend axially and open radially inwardly. Concavities 144 may be evenly azimuthally (e.g. circumferentially) distributed about central axis 2. Concavities 144 may be configured to provide additional space for transducer assemblies 118 to thereby minimize (to the extent possible) the likelihood of short circuits between transducer assemblies 118 and radially outward surface 121 of transducer holder 142. In one particular and non-limiting example, for a transducer assembly 118 with a diameter of 15mm in a vicinity of piezoelectric transducer elements 516, the diameter of curvature of concavities 144 may be 16mm. In some examples, insulating material (e.g. a high-temperature insulating film, such as Kapton^{™} manufactured by Dupont and/or the like) may be provided in concavities 144 and/or in any other spaces between radially outward surface 121 of transducer holder 142 and transducer assemblies 118 to provide additional electrical and/or thermal isolation and to minimize arcing.

In some examples, the first, second or both flanges 158, 160 of transducer holder 142 comprise slots (also referred to as recesses) 156 which are shown best in Figures 14 and 15. Slots 156 may comprise axially recessed slots shaped to receive axially extending protrusions 502 (also referred to as keys 502) of transducer assemblies 118. Slots 156 may be provided on axially facing surfaces 158A, 160A of flanges 158, 160 and may extend to the radially outward edges of flanges 158, 160. Slots 156 may receive axially extending protrusions 502 of transducer assemblies 118 and may thereby prevent rotation of particular components of transducer assemblies 118 about their respective axial axes. More particularly, protrusion 502 may be provided on the one of threaded members 504, 506 that is connected (via rod 512) to cap 510 or is otherwise connected to piezoelectric stack 530, such that these component to which protrusion 502 is connected are prevented from rotation when protrusion 502 extends axially into slot 156. Notably, however, the one of threaded members 504, 506 which does not include protrusion 502 is free to rotate. As described in further detail elsewhere in this disclosure, the cooperation of protrusions 502 of transducer assemblies 118 and slots 156 of transducer holder 142 to prevent rotation of one of threaded members 504, 506 about their respective axial axes may be used to pre-compress or pre-load transducer assemblies 118 to thereby cause transducer assemblies 118 to perform in a desired manner in response to electrical stimulation. In some examples, cap 510 may be provided with an axially extending protrusion for extension into a corresponding axially recessed slot on flange surface 158A. In some examples transducer assemblies 118 may be provided with slots and axially facing flange surfaces 158A, 160A may be provided with axially extending protrusions which provide similar functionality as protrusions 502 and slots 156 described herein.

Transducer assemblies 118 may be preloaded (or pre-compressed) to calibrate transducer assemblies 118 or to otherwise cause transducer assemblies 118 to behave in a desired manner in response to electrical stimulation. In general, pre-compression of transducer assemblies 118 may comprise pre-compression of piezoelectric transducer elements 516 in piezoelectric stack 530. In the Figure 14 example, pre-compression of a transducer assembly 118 may be achieved by mounting transducer assembly 118 between axial facing surfaces 158A, 160A of flanges 158, 160 of transducer holder 142 and then rotating threaded members 504, 506 relative to one another to move threaded members 504, 506 axially relative to one another and to thereby adjust the compression force applied to piezoelectric transducer elements 516 in piezoelectric stack 530. As discussed above, relative rotation of threaded members 504, 506 adjusts the axial length of transducer assemblies 118. However, when transducer assemblies 118 are connected between axial facing flange surface 158A, 160A, flanges 158, 160 are relatively rigid (as compared to transducer elements 516) and flanges 158, 160 do not deform substantially to accommodate any elongation of the axial dimension therebetween. Consequently, the forces associated with the relative rotation of threaded members 504, 506 and the axial movement of threaded members 504, 506 relative to one another manifest as compression of transducer elements 516 and/or piezoelectric stacks 530. Compressive force accumulates as the joined assembly of threaded members 504, 506 elongates due to their counter rotation and abuts against axial-facing surface 160A of flange 160, while cap 510 abuts against axial-facing surface 158A of flange 158.

The relative rotation of threaded members 504, 506 may be aided by the extension of protrusion 502 into slot 156 which may prevent rotational movement of one of threaded members 504, 506. In the example, where male threaded member 504 comprises protrusion 502 which extends axially into slot 156, male threaded member 504 is prevented from rotation and female threaded member 506 can be rotated relative to male threaded member 504 using a suitable wrench, spanner or the like. In the example, female threaded member 506 comprises faces (not expressly enumerated) to provide grip with a hexagonal wrench, spanner or the like to facilitate rotation of threaded member 506. Other alternate shapes and techniques for gripping one of threaded members 504, 506 may be provided in some examples.

As described above, the transducer assembly 118 is mechanically adjustable (e.g. by relative rotation of threaded members 504, 506) to exert preload pressure on piezoelectric transducer elements 516 of piezoelectric stack 530 and to thereby "tune" the response characteristics of transducer assembly 118 to applied electrical stimuli and/or to applied external forces. In the example, piezoelectric transducer elements 516 which make up piezoelectric stack 530 of transducer assembly 118 are used to generate pressure waves in sub 102 which travel acoustically through connected drill string and/or pipe. By applying an electric field to piezoelectric transducer elements 516, the piezoelectric effect causes piezoelectric transducer elements 516 to expand, thus launching a pressure wave which travels longitudinally (e.g. axially) through the sub-pipe. Suitable modulation of the electric field can be used to communicate information through sub 102 and any connected drill string and/or pipe. In some examples, piezoelectric transducer elements 516 which make up stack 530' of transducer assembly 118' are used to receive pressure waves from sub 102 which travel acoustically through connected drill string and/or pipe. By applying external forces (e.g. acoustic or pressure-based forces) to transducer elements 516, the piezoelectric effect causes piezoelectric transducer elements 516 to generate corresponding electrical signals which may be suitably demodulated to extract data.

Referring to Figures 1D and 3, apparatus 100 may comprise an electronics housing 110. Electronics housing 110 may comprise a connector component 113 for connection of electronics housing 110 to electronic connector 149 of feed-through 108. In addition to connector component 113, electronics housing 110 may comprise one or more electronics compartments 114, each of which may be configured for housing tools, sensors, batteries, communications hardware, suitable controllers, other electronics and/or the like. Electronics housing 110 may also comprise mechanical connectors 112 for connecting adjacent electronics compartments 114 and a tail cone 116.

Mechanical connectors 112 may provide connector joints for securely coupling adjacent electronic compartments 114 and/or for coupling an electronic compartment 114 to tail cone 116. In the example, electronics housing 110 comprises a plurality of composite, pressure-sealed electronics compartments 114 connected to one another by mechanical connectors 112. In the Figure 1D embodiment, electronics and battery(s) (e.g. tools, sensors, batteries, communications hardware, suitable controllers, other electronics and/or the like) are housed within electronics compartments 114 of electronics housing 110. To the extent that such components are located in different electronics compartments 114, such components may be connected through suitable electrical connectors (e.g. by Amphenol and/or the like) within electronics housing 110 that pass between electronics compartments 114. In some particular and non-limiting examples, circuit boards may be mounted on strongbacks, encapsulated with a high temperature potting compound such as Sylgard^{™}, placed inside pressure-sealed electronics compartments 114 within electronics housing 110 and sealed with O-rings (not shown) for protection against the pressure, corrosion and abrasion of drilling fluid.

With the use of mechanical connectors 112, any suitable number of electronics compartments can be provided as part of electronics housing 110. Depending on the length of electronics housing 110, in some examples, electronics housing 110 may be further axially centered by means of additional fins (not shown) within sub 102 and/or within an adjacent pipe stand or pipe (not shown) connected to pin end 102B of sub 102. The length of electronics housing 110 may depend in part on the number, type and amount of tools, sensors, batteries, communications hardware, suitable controllers, other electronics and/or the like housed within electronics housing 110 and the length of the circuit boards used to implement these components.

In particular examples, electronics housing 110 may be pre-assembled as a single unit and at least partially inserted bore 134 of sub 102 from second axial end 102A until connector component 113 of electronics housing 110 is operatively connected to electronics connector 149 of feed-through 108. The connection between connector component 113 of electronics housing 110 and electronics connector 149 of feed-through may comprise a threaded connection (not expressly shown). In further particular examples, electronics housing 110 may be pre-assembled and operatively connected to electronics connector 149 of feed-through 108 to provide electronics housing 110 and feed-through 108 as a single unit. The combined feed-through 108 and electronics housing 110 may be inserted into bore 134 of sub 102 from the first axial end 102A until feed-through 108 abuts arrest 138. In some further particular examples, transducer-holding assembly 104, feed-through 108 and electronics housing 110 may be pre-assembled as a single unit prior to being inserted into bore 134 of sub 102 from the first axial end 102A.

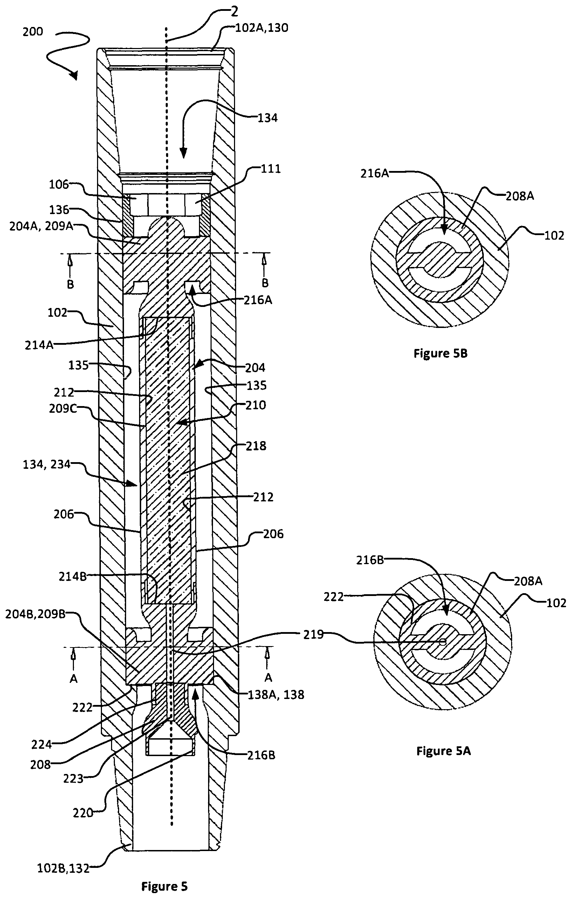

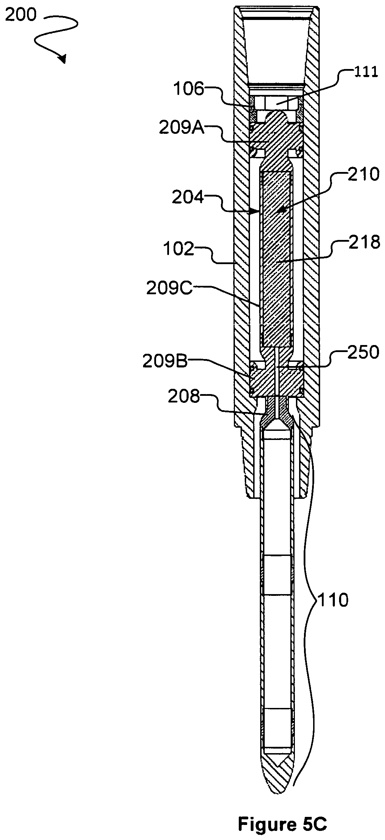

Figures 5, 5A and 5B (collectively, Figure 5) show various views of an apparatus 200 for mounting transducers to a sub 102 according to another embodiment. Apparatus 200 of the Figure 5 embodiment comprises a sub 102, a tension collar 106 and an optional electronics housing 110 which may be substantially similar to those of the Figure 1 embodiment (apparatus 100) described elsewhere in this disclosure. Apparatus 200 of Figure 5 differs from apparatus 100 of Figure 1 primarily in that apparatus 200 comprises a transducer-holding assembly 204 which, when mounted in bore 134 of sub 102, permits the location of one or more transducer assembly(s) 218 at a radially inward location(s) relatively close to central axis 2 and permits the flow of drilling fluid through apparatus 200 through a channel 234 located radially outwardly of transducer assemblies 218 (e.g. between a radial outward surface 206 of transducer-holding assembly 204 and bore-defining surface 135 of sub 102). Feed-through 208 of the Figure 5 embodiment is also different from feed through 108 of the Figure 1 embodiment.

Transducer-holding assembly 204 of the Figure 5 embodiment comprises a multi-part transducer holder 209 comprising a first axial end component 209A at first axial end 204A of transducer-holding assembly 204, a second axial end component 209B at opposing second axial end 204B of transducer-holding assembly 204and a central component 209C located between axial end components 209A, 209B. Together, components 209A, 209B, 209C of transducer holder 209 define a cavity 210 for housing one or more transducer assembly(s) 218. More particularly, central component 209C comprises a bore defining surface 212 which defines the radial extent of cavity 210 and central component 209C connects to each of axial end components 209A, 209B which respectively comprise axial-facing surfaces 214A, 214B which define the axial extent of cavity 210. Central component 209C may comprise male threads at each of its axial ends for connecting to corresponding female threads of axial end components 209A, 209B. These threads are not explicitly shown in Figure 5. Central component 209C may be called barrel housing. Further, the male and female threads may be reversed in some examples. In some examples, other techniques (e.g. pressure fits with O-ring seals and/or the like) may be used to connect central component 209C to axial end components 209A, 209B. Axial end components 209A, 209B each provide channels 216A, 216B which extend axially therethrough for permitting the flow of drilling fluid through apparatus 200. Axial end component 209B also comprises an axially extending conduit 219 through which electronic leads (e.g. wires) may extend to connect electronics housed in electronics housing 110, through feed-through 208, to transducer assembly(s) 218.

Feed-through 208 of the Figure 5 embodiment differs from feed-through 108 of the Figures 1 embodiment in that some of the functions and features of feed-through 108 are implemented by axial end component 209B in the Figure 5 embodiment. In particular, feed-through 208 comprises an electronics connector 220 that is similar to electronics connector 149 of feed-through 108 described elsewhere herein and connects to electronics housing 110 to locate electronics housing 110 radially close to (or co-axial with) central axis 2. Feed through 208 also comprises a conduit 223 which is axially aligned with conduit 219 for routing electronic leads (e.g. wires) to connect electronics housed in electronics housing 110, through feed-through 208 (via conduit 223), through axial end component 209B (via conduit 219) and to transducer assembly(s) 218. Feed-through 208 may connect rigidly to axial end component 209B (e.g. prior to insertion of transducer-holding assembly 204 into bore 134). Feed-through 208 may comprise male threads for connecting to corresponding female threads of axial end component 209B at connection 224. These threads of connection 224 are not explicitly shown in Figure 5. Further, the male and female threads may be reversed in some examples. In some examples, other techniques (e.g. pressure fits with O-ring seals and/or the like) may be used to connect axial end component 209B to feed-through 208.

In the example, axial end component 209B is inserted into bore 134 through first axial end 102A of sub 102 and abuts (e.g. bears) against arrest 138. Arrest 138 may be substantially similar to arrest 138 described elsewhere in this disclosure. Axial end component 209B may comprise an axial-facing bearing surface 222 which is similar to surface 151A of feed-through 108 for bearing against a complementary axial-facing surface 138A of arrest 138. Where arrest 138 is threaded, axial end component 209B may be modified for connection to a threaded arrest 138. In some examples, the threads of connection 224 of axial end component 209B may be configured for direct connection of axial end component 209B to electronics housing 110, in which case there is no need for a separate feed-through 208 and feed-through 208 may be omitted. In such examples, transducer-holding assembly 204 may be said to comprise a feed-through portion which may connect to electronics housing 110 and bear against arrest 138.

Apparatus 200 comprises a tension collar 106 which is substantially similar to tension collar 106 of the Figure 1 embodiment. Connector component 107 of tension collar 106 may be connected to complementary connector component 136 on bore-defining surface 135 of sub 102 to permit axial adjustment of tension collar 106 relative to sub 102. In the particular case of the example, connector components 107, 136 comprise threads, such that tension collar 106 may be rotated to adjust the axial position of tension collar 106 relative to sub 102. In the Figure 5 embodiment, tension collar 106 bears against first axial end component 209A of transducer-holding assembly 204. In a manner similar to that discussed above, suitable rotation of tension collar 206 may be used to control the axial forces by which tension collar 106 bears on first axial end component 209A of transducer-holding assembly 204, the axial forces by which transducer-holding assembly 204 (in particular second axial end component 209B) bears against arrest 138 and/or the corresponding compressive forces by which transducer-holding assembly 204 is axially compressed between tension collar 106 and arrest 138. Through these abutting and/or threaded connections, transducer-holding assembly 204 (via tension collar 106) may be mounted in the bore 134 of sub 102 in a compressed state and in intimate contact for acoustic coupling with sub 102 and corresponding acoustic communication between transducer-holding assembly 204 and sub 102 any connected drill string and/or pipe.

Transducer-holding assembly 204 of the Figure 5 embodiment comprises one or more transducer assembly(s) 218 which are operatively located in cavity 210. Although Figure 5 does not expressly provide any detail of transducer assembly(s) 218, each of transducer assembly(s) 218 may be substantially similar to transducer assembly 118 described elsewhere in this disclosure. In some examples, axial-facing surfaces 214A, 214B of first and second axial end components 209A, 209B may be shaped to provide features and/or functionality similar to that of axial facing surfaces 158A, 160A of flanges 158, 160 described elsewhere in this disclosure. In this regard, axial-facing surfaces 214A, 214B may be considered to and/or referred to as flange surfaces. In other examples, different components (not shown) may be provided with features and/or functionality similar to that of axial facing surfaces 158A, 160A. In some examples, air gaps in cavity 210 (e.g. between transducer assembly(s) 218 central component 209C) may be filled with a high temperature potting compounding such as SylgardTM (manufactured by Dow Corning) and/or the like.

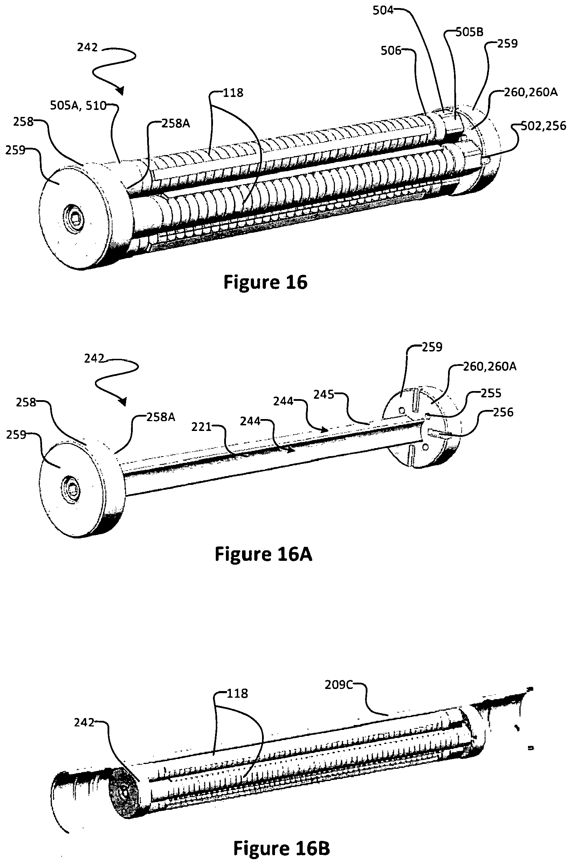

Figure 16 depicts transducer holder 242 which is holding a plurality of transducer assemblies 118 according to an example. Figure 16A shows the Figure 16 transducer holder 242 with transducer assemblies 118 removed for clarity. Transducer holder 242 of the Figure 16 example is suitable for use with apparatus 200 of Figure 5 and, in some examples, may comprise a sub-component of transducer holder assembly 204 and/or transducer holder 209 of apparatus 200. In particular, transducer holder 242 of Figure 16 and 16A may be located in cavity 210 defined by axial end components 209A, 209B and central component 209C. Transducer assemblies 118 shown in Figure 16 may be substantially similar to transducer assemblies 118 described elsewhere in this disclosure. Figure 16B depicts the transducer holder 242 which is holding a plurality of transducer assemblies 118 housed within a partially cut-away central component (barrel housing) 209C.

Transducer holder 242 of the Figure 16 example comprises many features that are similar to those of transducer holder 142 described elsewhere in this disclosure. In particular, transducer holder 242 comprises one or more transducer mounting features 259 for mounting transducer assemblies 118 to transducer holder 242, one or more wiring channels 255 for passing electrical leads (e.g. wires) that connect transducer assemblies 118 mounted in transducer holder 242 to electronics housed in electronics housing 110 (e.g. via conduits 219, 223 of axial end component 209B and feed-through 208. In the Figure 16 example, transducer mounting features 259 are provided by first and second flanges 258, 260 of transducer holder 242. More particularly, first and second radially extending and axially facing surfaces 258A, 260A of first and second flanges 258, 260 hold axial ends 505A, 505B of transducer assemblies 118. Flanges 258, 260 and their corresponding axial facing flange surfaces 258A, 260A may comprise characteristics, features and/or variations similar to those of flanges 158, 160 and axial-facing flange surfaces 158, 160 described elsewhere herein and may provide functionality that is substantially similar to flanges 158, 160 and axial-facing flange surfaces 158, 160 described elsewhere herein.

The portion of radially outward surface 221 of transducer holder 242 that extends between first and second flange surfaces 258A, 260A may, in some examples, comprise a plurality of concavities or recesses 244 shaped for accommodating corresponding portions of corresponding transducer assemblies 118, as shown in Figure 16 and 16A. Concavities 244 may comprise characteristics, features and/or variations similar to those of concavities 144 described elsewhere herein and may provide functionality that is substantially similar to concavities 144 described elsewhere herein. In some examples, insulating material (e.g. a high-temperature insulating film, such as Kapton^{™} manufactured by Dupont and/or the like) may be provided in concavities 244 and/or in any other spaces between radially outward surface 221 of transducer holder 242 and transducer assemblies 118 to provide additional electrical and/or thermal isolation and to minimize arcing.

In some examples, the first, second or both flanges 158, 160 of transducer holder 142 comprise slots (also referred to as recesses) 256 which are shown best in Figure 16A. Slots 256 may comprise characteristics, features and/or variations similar to those of slots 156 described elsewhere herein and may provide functionality that is substantially similar to slots 156 described elsewhere herein. In particular, the combination of axially extending protrusions 502 on transducer assemblies 118 and axially recessed slots 256 on one or more of axial facing surfaces 258A, 260A (or vice versa) may be used to pre-load transducer assemblies 118.

Transducer holder 242 (together with transducer assemblies 118) may be shaped to be insertable within cavity 210 of transducer-holding assembly 204 of apparatus 200 of the Figure 5 embodiment. Referring now to Figure 5, when transducer holder 242 is housed in cavity 210, axial facing surfaces 214A, 214B of axial end components 209A, 209B may bear against flanges 258, 260. The screw connections between axial end components 209A, 209B and central component 209C may be used to control the bearing forces as between axial facing surfaces 214A, 214B and flanges 258, 260 to facilitate acoustic communication between transducer assemblies 118 and flanges 258, 260, to axial end components 209A, 209B, to sub 102 and to any connected drill string or pipe. In some examples, air-gaps in cavity 210 may be filled with a high temperature potting compounding such as Sylgard^{™} (manufactured by Dow Corning) and/or the like.

Transducer holder 242 comprises wire conduits 255 as described above, which may provide passages for wire from axial end cap 209B to transducer assemblies 118. In some examples, one or more wire conduits (not shown) may be provided from flange 260 at one axial end of transducer holder 242 to flange 258 at the opposing axial end of transducer holder 242 (e.g. through central member 245). Such conduits may also extend radially outwardly along flanges 258, 260 providing wire access to both axial ends of the transducer assemblies 118.

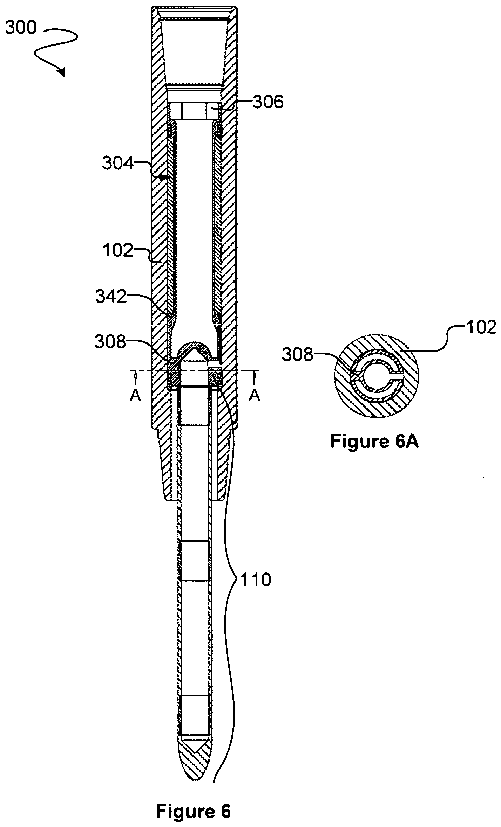

Figures 6 and 6A (collectively, Figure 6) show various views of an apparatus 300 for mounting transducers to a sub 102 according to another embodiment. Apparatus 300 of the Figure 6 embodiment comprises a sub 102 and an optional electronics housing 110 which may be substantially similar to those of the Figure 1 embodiment (apparatus 100) described elsewhere in this disclosure. Apparatus 300 of Figure 6 differs from apparatus 100 of Figure 1 primarily in that apparatus 300 comprises a transducer-holding assembly 304 with an integral feed-through portion 308 and an integral tension collar portion 306. In particular, feed-through portion 308 and tension collar portion 306 may be integral with transducer holder 342 of transducer-holding assembly 304. It is not necessary that feed-through portion 308 and/or tension collar portion 306 be integrally fabricated with transducer-holding assembly 304. These portions (e.g. feed-through portion 308 and/or tension collar portion 306) may be independently fabricated and then joined (e.g. by suitable welding or the like) to form integral portions of transducer-holding assembly 304.

With the exception of the contact/bearing of feed-through 108 against transducer-holding assembly 104, feed-through portion 308 of transducer-holding assembly 304 may comprise characteristics, features and/or variations similar to those of feed-through 108 of the Figure 1 embodiment and may provide functionality that is substantially similar to feed-through 108 of the Figure 1 embodiment. It will be appreciated that features of contact of bearing between feed-through 108 and transducer-holding assembly 104 are not application where feed-through portion 308 is integrally formed with transducer-holding assembly 304. Similarly, with the exception of the contact/bearing of tension collar 106 against transducer-holding assembly 104, tension collar portion 306 of transducer-holding assembly 304 may comprise characteristics, features and/or variations similar to those of tension collar 106 of the Figure 1 embodiment and may provide functionality that is substantially similar to tension collar 106 of the Figure 1 embodiment. It will be appreciated that features of contact of bearing between tension collar 106 and transducer-holding assembly 104 are not application where tension collar portion 306 is integrally formed with transducer-holding assembly 304.

In some examples, only one of feed-through portion 308 and tension collar portion 306 is integral with transducer-holding assembly 304 and the other one of feed-through portion 308 and tension collar portion 306 is provided as a separate feed-through 108 or tension collar 106 in a manner similar to that of the Figure 1 embodiment.

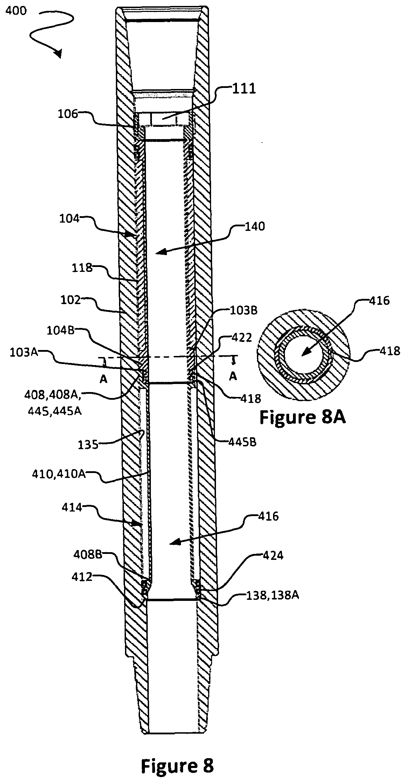

Figures 8 and 8A (collectively, Figure 8) shows various views of an apparatus 400 for mounting transducers to a sub 102 according to another embodiment. Apparatus 400 of the Figure 8 embodiment comprises a sub 102, a tension collar 106 and a transducer-holding assembly 104 which may be substantially similar to those of the Figure 1 embodiment (apparatus 100) described elsewhere in this disclosure. Apparatus 400 of Figure 8 differs from apparatus 100 of Figure 1 primarily in that apparatus 400 comprises a feed-through 408 which comprises an electronics mandrel 410. Electronics mandrel 410 of feed-through 408, together with bore-defining surface 135 of sub 102, provides an electronics housing 414 located between a radial outward facing surface 410A of electronics mandrel 410 and radially inward facing bore-defining surface 135. Electronics housing 414 may provide the functionality of electronics housing 110 of the Figure 1 embodiment. In particular, electronics housing 414 may house tools, sensors, batteries, communications hardware, suitable controllers, other electronics and/or the like. Feed-through 408 may comprise a conduit 418 through which electrical leads (e.g. wires) may extend between the various components in electronics housing 414 and transducer assemblies 118 held by transducer-holding assembly 104. Feed-through 408 may also comprise a bore 416 which is in communication with bore 140 to permit the flow of drilling fluid through apparatus 400 and sub 102.

In other respects, feed-through 408 may be generally similar to feed-through 108 described above. For example, feed-through 408 may comprise a first axial end 408A which contacts and bears against second axial end 104B of transducer-holding assembly 104 in much the same manner as the contact between transducer-holding assembly 104 and feed-through 108 described above. In the particular case of the example, first axial end 408A of feed-through 408 may comprise a transducer-holding assembly engaging portion 445 comprising a recessed surface 445A and a shoulder 445B which are similar to recessed surface 145A and shoulder 145B described elsewhere in this disclosure for engaging with corresponding recessed surface 103A and shoulder 103B of the second axial end 104B of transducer-holding assembly 104. With these components, first axial end 408A of feed-through 408 contacts and bears against second axial end 104B of transducer-holding assembly 104. O-rings 422 similar to O-rings 122 may be provided between engaging surfaces of first end 408A of feed-through 408 and second end 140B of transducer-holding assembly 104. Feed-through 408 may also comprise a second end 408B which bears against arrest 138. More particularly, second end 408B of feed-through 408 may comprise an axial facing surface 412 which bears against axial facing surface 138A of arrest 138. Where arrest 138 comprises a threaded arrest, then second end 408B of feed-through 408 may be modified to provide suitable threads. O-rings 424 similar to O-rings 124 may be provided between engaging surfaces of second end 408B of feed-through 408 and bore-defining surface 135 of sub 102.

In some examples, a notch in electronics feed-through 408 and a corresponding key in transducer-holding assembly 104 may provide rotational alignment between feed-through 408 and transducer-holding assembly 104. In some examples, tension collar 106 may be integral with transducer-holding assembly 104 to provide a tension collar portion of transducer-holding assembly 104. Such a tension collar portion could comprise features and provide functionality similar to that of tension collar 106, except where tension collar 106 contacts and bears against transducer-holding assembly 104. In some examples, feed-through 408 may be integral with transducer-holding assembly 104 to provide a feed-through portion of transducer-holding assembly 104. Such a feed-through portion could comprise features and provide functionality similar to that of feed-through 408, except where feed-through 408 contacts and bears against transducer-holding assembly 104.

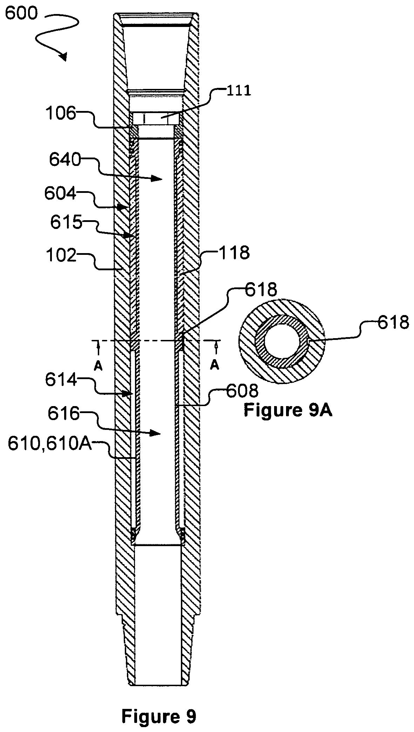

Figures 9 and 9A (collectively, Figure 9) shows various views of an apparatus 600 for mounting transducers to a sub 102 according to another embodiment. Apparatus 600 of the Figure 9 embodiment comprises a sub 102 and a tension collar 106 which may be substantially similar to those of the Figure 1 embodiment (apparatus 100) described elsewhere in this disclosure. Apparatus 600 of Figure 9 is similar in many respects to apparatus 400 of Figure 8, except that apparatus 600 comprises a transducer-holding assembly 604 which comprises an integral feed-through portion 608. Transducer-holding assembly 604 comprises features of provides functionality substantially similar to transducer-holding assembly 104 of the Figure 8 apparatus 400 (and the Figure 1 apparatus 100), except where transducer-holding assembly 104 of apparatus 400 contacts and bears against feed-through 408. In particular, transducer-holding assembly 604 may hold transducer assemblies 118 in cavity 615 (which may be similar to cavity 115 described above).

Similarly, feed-through portion 608 comprises features and provides functionality substantially similar to feed-through 408 of the Figure 8 apparatus 400, except where feed-through 408 of apparatus 400 contacts and bears against transducer-holding assembly 104. In particular, feed-through portion 608 may comprise an electronics mandrel 610. Electronics mandrel 610 of feed-through portion 608, together with bore-defining surface 135 of sub 102, provides an electronics housing 614 located between a radial outward facing surface 610A of electronics mandrel 610 and radially inward facing bore-defining surface 135. Electronics housing 614 may house tools, sensors, batteries, communications hardware, suitable controllers, other electronics and/or the like. Feed-through portion 608 may comprise a conduit 618 through which electrical leads (e.g. wires) may extend between the various components in electronics housing 614 and transducer assemblies 118 held by transducer-holding assembly 604 in cavity 615. Feed-through 608 may also comprise a bore 616 which is in communication with bore 640 of transducer-holding assembly 604 to permit the flow of drilling fluid through apparatus 600 and sub 102. In other respects, apparatus 600 may be similar to apparatus 400.

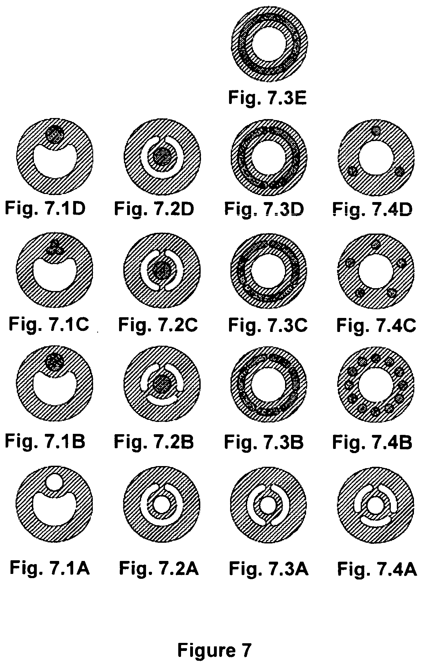

Figure 7 shows a number of transducer-holding assembly cross-sections and feed-through cross-sections which may be used in some unclaimed embodiments. Figures 7.1B-7.1D depict transducer-holding assemblies with off-centered transducer compartments and a shunting channel for drilling fluid. Figures 7.2B-7.2D depict transducer-holding assemblies with centered transducer compartments and various configurations of shunting channels for drilling fluid. Figures 7.3B-7.3E depict transducer-holding assemblies with annular transducer compartments and a central channel (co-axial with central axis 2) for drilling fluid. Figures 7.4 B-7.4D depict transducer-holding assemblies with evenly azimuthally (e.g. circumferentially) distributed transducer compartments around a central channel for drilling fluid. Figures 7.1A-7.4A depict various unclaimed embodiments of feed-through configurations for use with corresponding transducer-holding assembly configurations.

The outer diameter of sub 102, as shown in Figures 1-9, may match the collar diameter of the drill string pipe stands (e.g. at 6.5in [about 16.5cm], or 4.75in [about 12.1cm] in some examples). In one unclaimed example, as shown in Figures 10C and 10D, sub 102' has an outer diameter of 6.5in (about 16.5cm) with a wall thickness of 0.75in (about 1.9cm), the transducer-holding assembly has an outer diameter of 4in (about 10cm) , and has centrally within it a channel with diameter 2.25in (about 5.7cm) for drilling fluid. As shown in Figures 10A and 10B, sub 102 may have a wall thickness of 1.25in (about 3.2cm) to provide more mechanical tensile and torsional strength.

As discussed above, the various examples/embodiments/unclaimed examples described herein mount transducers in sub 102 such that there is intimate (e.g. acoustic) contact between transducers and sub 102 such that pressure waves created by transducers are transmitted to sub 102 and through sub 102 to any connected drill string and/or pipe. In examples, sensors within the electronics housing (e.g. electronics housing 110) collect information about various operational parameters of the drill string. Communication electronics within the electronics housing encode the sensor information within waves that may be generated by transducer assemblies 118 (e.g. actuators). Electrical signals may be transmitted from the electronics housing 110 via wires through suitable conduits to transducer assemblies 118 and cause transducer assemblies 118 to expand and contract thereby creating mechanical vibrations. The transducer-holding assemblies, which are acoustically coupled to sub 102, transfer these mechanical vibrations through sub 102 and along the drill string (not shown) to which sub 102 is attached. Transducers may additionally or alternatively be mounted in acoustic contact with sub 102 for receiving acoustic signals from sub 102 and generating corresponding electrical signals. For example, in examples, transducer assemblies 118' may generate electrical signals in response to acoustic signals received from sub 102 (e.g. from a connected pipe string) and such electrical signals may be transmitted to electronics housing 110 where data may be extracted by suitable receive circuitry.

In the embodiments described herein, transducer assemblies 118 may be pre-loaded as described above and are in intimate (e.g. abutting) contact with their corresponding transducer-holding assemblies for acoustic coupling of transducer assemblies 118 to transducer-holding assemblies. Transducer assemblies 118 are responsive to electrical stimulation. Each preloaded transducer assembly 118 may be used to generate mechanical vibrations based on corresponding electrical signals. When transducer assemblies 118 are actuated in this manner, they may acoustically transmit signals along sub 102 and along the drill string to which sub 102 is coupled. In some examples, such acoustic transmission can occur from a transmitter located at a downhole location in the drill string (e.g. at or near a drill head) to a receiver located at an uphole location. Data transmitted from the downhole transmitter to the uphole receiver may include, for example, data from MWD sensors and other tools.

Transducer assemblies 118' are responsive to acoustic stimulation. Each preloaded transducer assembly 118' may be used to generate an electrical signal based on corresponding acoustic signals received via sub 102 and any drill string coupled to sub 102. In some examples, such acoustic reception can occur at a receiver located at a downhole location in the drill string (e.g. at or near a drill head) from a transmitter located at an uphole location. Data received at the downhole receiver may include, for example, control and/or configuration information relating to the operation of MWD sensors and other tools deployed at or near the downhole location.

In examples described herein, transducer assemblies 118, 118' may be operatively (e.g. acoustically) mounted to sub 102 and may be used to transmit acoustic signals and/or receive acoustic signals. In some examples, separate transducer holding assemblies 104 may be provided for transmit functionality and receive functionality. Each such transducer-holding assembly 104 may comprise only transducer assemblies 118 configured for transmission or only receive-configured transducer assemblies 118'. This is not necessary. In some examples, a single transducer-holding assembly 1045 may comprise a number of transducer assemblies 118 configured for transmission and a number of receive-configured transducer assemblies 118'. In such a configuration, a single transducer-holding assembly 104 may be used to both transmit and receive acoustic signals. It will be appreciated by those skilled in the art that the transmit and receive configurations transducer assemblies 118, 118' shown in Figure 17A and 17B are not exhaustive. With suitable use of electrical insulators located between transducer elements 516, suitable wiring configurations and/or the like transducer assemblies may be configured for transmission of acoustic signals with different orientations of transducer elements and/or transducer assemblies may be configured for reception of acoustic signals with different orientations of transducer elements.

P (pressure) and T (torsional) waves can be launched into the pipe string (not shown) via the various examples/embodiments/unclaimed examples described herein using alternative synchronization patterns. Where transducer assemblies 118 are evenly circumferentially distributed about central axis 2, such transducer assemblies 118 may provide circular points of pressure to launch pressure waves into the body of sub 102 for propagation of energy through the walls of sub 102 and through the walls of the pipe stands that form a drill string. The ratio of masses ahead and behind the launch points may allow tuning of the frequency response for allow communications to propagate through the walls of the pipe stands that make up the drill string.

The transducer-holding assembly and sub 102, when compressed, may provide a detuned mechanical lateral resonance in the range of approximately 1KHz to 10KHz. Mechanical resonance is provided by the elasticity and mass of the material(s) used to fabricate sub 102 and the transducer-holding assembly. In some examples, sub 102 and the transducer-holding assembly are fabricated from non-magnetized steel and may be machined using a CNC 4-axes live mill.

Embodiments of the invention provide a mechanical mounting apparatus for operatively connecting transducers to pipes. Embodiments of the invention are capable of servicing multiple markets for which transducers in pipe are desired. Embodiments of the invention facilitate:
- Mounting multiple transducers (e.g. piezoelectric actuators) inside of a pipe, without unduly impact flow of material in or through the pipe.
- Tensioning multiple transducers (e.g. piezoelectric actuators) to provide appropriate signaling through the pipe.
- Mounting electronics and batteries used to actuate the transducers (e.g. piezoelectric actuators) inside a pipe.
- Providing electrical interconnection between the transducers (e.g. piezoelectric actuators) and the electronics.
- Mounting on an assembly of pipes drilling into the earth or travelling through other media.

Embodiments of the invention may be used for a variety of applications, including (by way of non-limiting example) to provide downhole data communications in the oil and gas industry where pipes are used to transport oil and gas. Current downhole communication systems rely on mud pulse telemetry or electromagnetic communication, each of which has inherent problems. It is expected that various embodiments of the invention (adapted for downhole communication systems in the oil and gas industry) could increase data communications rates by several orders of magnitude.

As energy resources become more precious, emerging technologies like geothermal energy will become more viable. Embodiments of the invention, adapted for geothermal exploration and drilling, could increase drilling efficiency and accuracy to a point where such energy sources become a mainstream energy provider. Embodiments of the invention could also be adapted for reservoir management, offshore drilling, undersea cable management and/or the like.

While a number of exemplary examples, unclaimed examples and embodiments are discussed herein, those of skill in the art will recognize certain modifications, permutations, additions and sub-combinations thereof. For example:
- The description above suggests that the pipes with which the apparatus and methods of the invention are used are drilled into earth. This is not necessary. In some examples, the pipes may be provided in other media.
- The description above suggests that piezoelectric actuators are used to create acoustic (e.g. pressure) waves in pipe. In other examples, actuators of other types (e.g. hydraulic actuators, electro-mechanical actuators, magnetostrictive actuators and/or the like) could be used to effect such acoustic waves.
- A generalized capability is envisioned to use alternative forms of generation using piezoelectric actuators as well as alternate forms of pressure generation. In the example described above, piezoelectric actuators expand and contract along the axial direction of the pipe and are used to stretch and contract the pipe axially. In some examples, piezoelectric actuators could be configured to expand and contract in radial directions to cause the pipe to expand and contract radially. In some examples, a series of such radially oriented actuators, spaced axially apart from one another, could be used to create transverse pressure waves that travel along the axial dimension of the pipe.
- Furthermore, although the terms "sub-pipe" or "sub" generally refers to the concept of any small component of the drill strings (e.g. pipes shorter than the drill stands). It should be understood such words are not limited to the concept of pipes shorter than the drill stands. In some examples, the sub-pipe may substantially match the length of the pipe stands used in forming the drill strings. In some particular and non-limiting examples, the sub-pipe has a length between 30 to 45 feet (about 9m to 14m). In some examples, the length of the sub may be longer than the pipe stands forming the drill string.
- In the examples described above, transducer elements 516 in transducer assemblies 118 are apertured and have generally annular cross-sections with generally circular outer circumferences. In other examples, transducer elements 516 may have other cross-sectional shapes. For example, transducer elements 516 may be apertured, but may have perimeter shapes other than circular.

## Claims

1. An apparatus for mounting one or more transducers to a drilling pipe comprising:
a sub-pipe (102) comprising a bore-defining surface (135) defining an axially oriented bore (134) therethrough, a connector (130) at a first axial end (102A), and a connector (132) at a second axial end (102B), at least one of the connectors (130, 132) connectable to the drilling pipe; and
a transducer-holding assembly (104) comprising one or more transducers (516), the transducer-holding assembly (104) operably inserted into the bore of the sub-pipe (102) from one of the first and second axial ends (102A, 102B) and mounted within the bore (134) of the sub-pipe (102) to provide intimate contact which facilitates acoustic communication between the one or more transducers (516) and the sub-pipe (102);
wherein the sub-pipe (102) is monolithically fabricated;
wherein the intimate contact which facilitates acoustic communication between the one or more transducers (516) and the sub-pipe (102) comprises the transducer-holding assembly (104) directly or indirectly bearing against the bore-defining surface (135) of the monolithically fabricated sub-pipe (102) at at least two axially spaced apart locations (104A, 104B), located at opposing first and second axial ends (104A, 104B) of the transducer-holding assembly (104) with the one or more transducers (516) located between the two axially spaced apart locations (104A, 104B), for providing, at each such axially spaced apart location (104A, 104B), an acoustic connection for communication of an acoustic signal into the sub-pipe (102), and, at at least one of the axially spaced apart locations (104A, 104B), a bearing surface portion of the bore-defining surface (135) of the monolithically fabricated sub-pipe (102) comprising an axially-facing, annular bearing surface (138A);
wherein the bore-defining surface (135) of the sub-pipe (102) comprises an axial facing annular arrest (138) shaped to reduce a cross-sectional area of the bore in a vicinity of the arrest (138) relative to at least one region of the bore adjacent the arrest (138);
wherein the transducer-holding assembly (104) is mounted within the bore of the sub-pipe (102) and the apparatus comprises a tension collar (106) located in the bore on a first axial side of the transducer-holding assembly (104) to bear against the first axial end (104A) of the transducer-holding assembly (104); and
wherein the apparatus comprises a feed-through (108) located in the bore on a second axial side of the transducer-holding assembly (104) to bear against the second axial end (104B) of the transducer-holding assembly (104).

2. An apparatus according to claim 1 wherein the transducer-holding assembly (104) is mounted within the bore of the sub-pipe (102) and wherein the transducer-holding assembly (104) comprises a tension collar portion.

3. An apparatus according to claim 1 wherein the feed-through (108) comprises a sub-pipe engaging portion (151) shaped to bear against the arrest (138) and a connector portion (149) for connection to an electronics housing (110).

4. An apparatus according to claim 1 wherein the feed-through (108) comprises a radially outward surface (153) which, together with the bore-defining surface (135) of the sub-pipe (102) define at least a portion of an electronics housing (110) for housing electronics.

5. An apparatus according to claim 1 or 2 wherein the transducer-holding assembly (104) comprises a feed-through portion.

6. An apparatus according to claim 5 wherein the feed-through portion comprises a sub-pipe engaging portion (151) shaped to bear against the arrest (138) and a connector portion (149) for connection to an electronics housing (110).

7. An apparatus according to claim 5 wherein the feed-through portion comprises a radially outward surface (153) which, together with the bore-defining surface (135) of the sub-pipe (102) define at least a portion of an electronics housing (110) for housing electronics.

8. An apparatus according to claim 1 wherein the tension collar (106) is connected to the bore-defining surface (135) to bear against the first axial end (104A) of the transducer-holding assembly (104); wherein the connection of the tension collar (106) to the bore-defining surface (135) comprises an adjustable connection wherein the tension collar (106) is axially moveable relative to the sub-pipe (102) when connected thereto for adjusting a force with which the tension collar (106) bears against the first axial end (104A) of the transducer-holding assembly (104); and wherein the apparatus (100) comprises a feed-through (108) located in the bore on a second axial side of the transducer-holding assembly (104) to bear against a second axial end of the transducer-holding assembly (104) and against the arrest (138) and wherein the tension collar (106) is adjustably connected to the bore-defining surface (135) for adjustable axial movement relative to the sub-pipe (102) and corresponding adjustment of a force with which the tension collar (106) bears against the first axial end (104A) of the transducer-holding assembly (104).

9. An apparatus according to any one of claims 1 to 8 wherein the transducer-holding assembly (104) comprises:
a transducer holder (142, 242); and
one or more transducer assemblies (118), each transducer assembly comprising a plurality of transducers (516);
the transducer holder (142, 242) comprising one or more mounting features (159) for holding one or more transducer assemblies (118); wherein the one or more mounting features (159) comprise:
- a first flange (158) comprising a first flange surface (158A) that faces generally toward the second axial end (102B) of the sub-pipe (102) for contacting first axial ends (505A) of the one or more transducer assemblies (118); and
- a second flange (160) axially spaced apart from the first flange (158), the second flange (160) comprising a second flange surface (160A) that faces generally toward the first axial end (102A) of the sub-pipe (102) for contacting the second axial ends (505B) of the one or more transducer assemblies (118);
wherein the contact between the first and second flange surfaces (158A, 160A) and the first and second axial ends (505A, 505B) of one or more transducer assemblies (118) holds the transducer assemblies (118) on the transducer holder (142).

10. Use of the apparatus of any one of claims 1 to 9 for acoustic communication along the drilling pipe.

11. A method for mounting one or more transducers to a drilling pipe for acoustic communication along the drilling pipe, the method comprising:
providing a sub-pipe (102) comprising a bore-defining surface (135) defining an axially oriented bore (134) therethrough, a connector (130) at a first axial end (120A), and a connector (132) at a second axial end (102B), at least one of the connectors (130, 132) connectable to the drilling pipe;
shaping the bore-defining surface (135) of the sub-pipe (102) to provide an axial facing annular arrest (138) shaped to reduce a cross-sectional area of the bore in a vicinity of the arrest (138) relative to at least one region of the bore adjacent the arrest (138);
providing a transducer-holding assembly (104) comprising one or more transducers (516);
inserting the transducer-holding assembly (104) into the bore of the sub-pipe (102) from one of the first and second axial ends (102A, 102B); and
mounting the transducer-holding assembly (104) in the bore of the sub-pipe (102) to provide intimate contact which facilitates acoustic communication between the one or more transducers (516) and the sub-pipe (102);
inserting a tension collar (106) into the bore from the first axial end (102A) of the sub-pipe (102) and on a first axial side of the transducer-holding assembly (104) to bear against a first axial end (104A) of the transducer-holding assembly (104); and
inserting a feed-through (108) into the bore from the first axial end of the sub-pipe (102) and on a second axial side of the transducer-holding assembly (104) to contact the bore-defining surface (135) and to bear against a second axial end (104B) of the transducer-holding assembly (104),
wherein the sub-pipe (102) is monolithically fabricated, and
wherein mounting the transducer-holding assembly (104) in the bore of the sub-pipe (102) to provide the intimate contact comprises the transducer-holding assembly (104) directly or indirectly bearing against the bore-defining surface (135) of the monolithically fabricated sub-pipe (102) at at least two axially spaced apart locations (104A, 104B), located at the first and second axial ends (104A, 104B) of the transducer-holding assembly (104), respectively, with the one or more transducers (516) located between the two axially spaced apart locations (104A, 104B), for providing, at each such axially spaced apart location (104A, 104B), an acoustic connection for communication of an acoustic signal into the sub-pipe (102), and, at at least one of the axially spaced apart locations (104A, 104B), a bearing surface portion of the bore-defining surface (135) of the monolithically fabricated sub-pipe (102) comprising an axially-facing, annular bearing surface (138A).

12. A method according to claim 11 comprising connecting the tension collar (106) to the bore-defining surface (135) to bear against the first axial end of the transducer-holding assembly (104), wherein the connection of the tension collar (106) to the bore-defining surface (135) comprises an adjustable connection wherein the tension collar (106) is axially moveable relative to the sub-pipe (102) when connected thereto and wherein the method comprises adjusting a force with which the tension collar (106) bears against the first axial end of the transducer-holding assembly (104) by adjusting the adjustable connection and moving the tension collar (106) axially relative to the sub-pipe (102).

## Patentansprüche

1. Vorrichtung zum Befestigen eines oder mehrerer Wandler an einem Bohrrohr, die umfasst:
ein Teilrohr (102), das eine bohrungsdefinierende Oberfläche (135), die eine axial ausgerichtete Bohrung (134) durch sich hindurch definiert, einen Verbinder (130) an einem ersten axialen Ende (102A) und einen Verbinder (132) an einem zweiten axialen Ende (102B) umfasst, wobei zumindest einer der Verbinder (130, 132) mit dem Bohrrohr verbindbar ist; und
eine Wandlerhalteanordnung (104), die einen oder mehrere Wandler (516) umfasst, wobei die Wandlerhalteanordnung (104) von einem der ersten und zweiten axialen Enden (102A, 102B) aus betriebsfähig in die Bohrung des Teilrohrs (102) eingesetzt und in der Bohrung (134) des Teilrohrs (102) befestigt ist, um einen engen Kontakt herzustellen, der eine akustische Übertragung zwischen dem einen oder den mehreren Wandlern (516) und dem Teilrohr (102) begünstigt;
wobei das Teilrohr (102) monolithisch hergestellt ist;
wobei der enge Kontakt, der die akustische Übertragung zwischen dem einen oder den mehreren Wandlern (516) und dem Teilrohr (102) begünstigt, umfasst, dass die Wandlerhalteanordnung (104) direkt oder indirekt gegen die bohrungsdefinierende Oberfläche (135) des monolithisch hergestellten Teilrohrs (102) an zumindest zwei axial beabstandeten Orten (104A, 104B) drückt, die an gegenüberliegenden ersten und zweiten axialen Enden (104A, 104B) der Wandlerhalteanordnung (104) angeordnet sind, wobei der eine oder die mehreren Wandler (516) zwischen den zwei axial beabstandeten Orten (104A, 104B) angeordnet sind, um an jedem solchen axial beabstandeten Ort (104A, 104B) eine akustische Verbindung zur Übertragung eines akustischen Signals in das Teilrohr (102) bereitzustellen, und um an zumindest einem der axial beabstandeten Orte (104A, 104B) einen Lagerflächenabschnitt der bohrungsdefinierenden Oberfläche (135) des monolithisch hergestellten Teilrohrs (102), das eine axial zugewandte, ringförmige Lagerfläche (138A) umfasst, bereitzustellen;
wobei die bohrungsdefinierende Oberfläche (135) des Teilrohrs (102) eine axial zugewandte ringförmige Arretierung (138) aufweist, die derart geformt ist, dass sie eine Querschnittsfläche der Bohrung in der Nähe der Arretierung (138) relativ zu zumindest einem Bereich der an die Arretierung (138) angrenzenden Bohrung verringert;
wobei die Wandlerhalteanordnung (104) in der Bohrung des Teilrohrs (102) befestigt ist und die Vorrichtung einen Spannring (106) aufweist, der in der Bohrung auf einer ersten axialen Seite der Wandlerhalteanordnung (104) angeordnet ist, um gegen das erste axiale Ende (104A) der Wandlerhalteanordnung (104) zu drücken; und
wobei die Vorrichtung eine Durchführung (108) umfasst, die in der Bohrung auf einer zweiten axialen Seite der Wandlerhalteanordnung (104) angeordnet ist, um gegen das zweite axiale Ende (104B) der Wandlerhalteanordnung (104) zu drücken.

2. Vorrichtung nach Anspruch 1, wobei die Wandlerhalteanordnung (104) in der Bohrung des Teilrohrs (102) angebracht ist und wobei die Wandlerhalteanordnung (104) einen Spannringabschnitt umfasst.

3. Vorrichtung nach Anspruch 1, wobei die Durchführung (108) einen Teilrohreingriffsabschnitt (151), der derart geformt ist, dass er gegen die Arretierung (138) drückt, und einen Verbinderabschnitt (149) zur Verbindung mit einem Elektronikgehäuse (110) umfasst.

4. Vorrichtung nach Anspruch 1, wobei die Durchführung (108) eine radial nach außen gerichtete Oberfläche (153) aufweist, die zusammen mit der bohrungsdefinierenden Oberfläche (135) des Teilrohrs (102) zumindest einen Teil eines Elektronikgehäuses (110) zur Aufnahme von Elektronik definiert.

5. Vorrichtung nach Anspruch 1 oder 2, wobei die Wandlerhalteanordnung (104) einen Durchführungsabschnitt umfasst.

6. Vorrichtung nach Anspruch 5, wobei der Durchführungsabschnitt einen Teilrohreingriffsabschnitt (151), der derart geformt ist, dass er gegen die Arretierung (138) drückt, und einen Verbinderabschnitt (149) zur Verbindung mit einem Elektronikgehäuse (110) umfasst.

7. Vorrichtung nach Anspruch 5, wobei der Durchführungsabschnitt eine radial nach außen gerichtete Oberfläche (153) aufweist, die zusammen mit der bohrungsdefinierenden Oberfläche (135) des Teilrohrs (102) zumindest einen Teil eines Elektronikgehäuses (110) zur Aufnahme von Elektronik definiert.

8. Vorrichtung nach Anspruch 1, wobei der Spannring (106) mit der bohrungsdefinierenden Oberfläche (135) verbunden ist, um gegen das erste axiale Ende (104A) der Wandlerhalteanordnung (104) zu drücken; wobei die Verbindung des Spannrings (106) mit der bohrungsdefinierenden Oberfläche (135) eine einstellbare Verbindung umfasst, wobei der Spannring (106) relativ zu dem Teilrohr (102) axial beweglich ist, wenn er mit diesem verbunden ist, um eine Kraft einzustellen, mit der der Spannring (106) gegen das erste axiale Ende (104A) der Wandlerhalteanordnung (104) drückt; und wobei die Vorrichtung (100) eine Durchführung (108) aufweist, die in der Bohrung auf einer zweiten axialen Seite der Wandlerhalteanordnung (104) angeordnet ist, um gegen ein zweites axiales Ende der Wandlerhalteanordnung (104) und gegen die Arretierung (138) zu drücken, und wobei der Spannring (106) einstellbar mit der bohrungsdefinierenden Oberfläche (135) für eine einstellbare axiale Bewegung relativ zu dem Teilrohr (102) und eine entsprechende Einstellung einer Kraft verbunden ist, mit der der Spannring (106) gegen das erste axiale Ende (104A) der Wandlerhalteanordnung (104) drückt.

9. Vorrichtung nach einem der Ansprüche 1 bis 8, wobei die Wandlerhalteanordnung (104) umfasst:
eine Wandlerhalterung (142, 242); und
eine oder mehrere Wandleranordnungen (118), wobei jede Wandleranordnung eine Vielzahl von Wandlern (516) umfasst;
wobei der Wandlerhalter (142, 242) eine oder mehrere Befestigungsvorrichtungen (159) zum Halten einer oder mehrerer Wandleranordnungen (118) umfasst;
wobei die eine oder die mehreren Befestigungsvorrichtungen (159) umfassen:
- einen ersten Flansch (158), der eine erste Flanschfläche (158A) aufweist, die im Allgemeinen dem zweiten axialen Ende (102B) des Teilrohrs (102) zugewandt ist, um erste axiale Enden (505A) der einen oder mehreren Wandleranordnungen (118) zu kontaktieren; und
- einen zweiten Flansch (160), der axial von dem ersten Flansch (158) beabstandet ist, wobei der zweite Flansch (160) eine zweite Flanschfläche (160A) umfasst, die im Allgemeinen dem ersten axialen Ende (102A) des Teilrohrs (102) zugewandt ist, um die zweiten axialen Enden (505B) der einen oder mehreren Wandleranordnungen (118) zu kontaktieren;
wobei der Kontakt zwischen der ersten und zweiten Flanschfläche (158A, 160A) und den ersten und zweiten axialen Enden (505A, 505B) einer oder mehrerer Wandleranordnungen (118) die Wandleranordnungen (118) auf dem Wandlerhalter (142) hält.

10. Verwendung der Vorrichtung nach einem der Ansprüche 1 bis 9 zur akustischen Verbindung entlang des Bohrrohrs.

11. Verfahren zum Befestigen eines oder mehrerer Wandler an einem Bohrrohr zur akustischen Verbindung entlang des Bohrrohrs, wobei das Verfahren umfasst:
Bereitstellen eines Teilrohrs (102), das eine bohrungsdefinierende Oberfläche (135), die eine axial ausgerichtete Bohrung (134) durch sich hindurch definiert, einen Verbinder (130) an einem ersten axialen Ende (120A) und einen Verbinder (132) an einem zweiten axialen Ende (102B) umfasst, wobei zumindest einer der Verbinder (130, 132) mit dem Bohrrohr verbindbar ist;
Formen der bohrungsdefinierenden Oberfläche (135) des Teilrohrs (102), um eine axial zugewandte ringförmige Arretierung (138) bereitzustellen, die derart geformt ist, dass sie eine Querschnittsfläche der Bohrung in der Nähe der Arretierung (138) relativ zu zumindest einem Bereich der an die Arretierung (138) angrenzenden Bohrung verringert;
Bereitstellen einer Wandlerhalteanordnung (104), die einen oder mehrere Wandler (516) umfasst;
Einsetzen der Wandlerhalteanordnung (104) in die Bohrung des Teilrohrs (102) von einem der ersten und zweiten axialen Enden (102A, 102B); und Befestigen der Wandlerhaltebaugruppe (104) in der Bohrung des Teilrohrs (102), um einen engen Kontakt herzustellen, der die akustische Übertragung zwischen dem einen oder den mehreren Wandlern (516) und dem Teilrohr (102) begünstigt;
Einsetzen eines Spannrings (106) in die Bohrung vom ersten axialen Ende (102A) des Teilrohrs (102) und auf einer ersten axialen Seite der Wandlerhalteanordnung (104), um gegen ein erstes axiales Ende (104A) der Wandlerhalteanordnung (104) zu drücken; und
Einsetzen einer Durchführung (108) in die Bohrung von dem ersten axialen Ende des Teilrohrs (102) und auf einer zweiten axialen Seite der Wandlerhalteanordnung (104), um die bohrungsdefinierende Oberfläche (135) zu kontaktieren und gegen ein zweites axiales Ende (104B) der Wandlerhalteanordnung (104) zu drücken,
wobei das Teilrohr (102) monolithisch hergestellt ist, und
wobei das Befestigen der Wandlerhalteanordnung (104) in der Bohrung des Teilrohrs (102) zur Herstellung des engen Kontakts umfasst, dass die Wandlerhalteanordnung (104) direkt oder indirekt gegen die bohrungsdefinierende Oberfläche (135) des monolithisch hergestellten Teilrohrs (102) an zumindest zwei axial beabstandeten Orten (104A, 104B) drückt, die sich jeweils am ersten und zweiten axialen Ende (104A, 104B) der Wandlerhalteanordnung (104) befinden, wobei der eine oder die mehreren Wandler (516) zwischen den beiden axial beabstandeten Orten (104A, 104B) angeordnet sind, um an jedem dieser axial beabstandeten Orte (104A, 104B) eine akustische Verbindung zur Übertragung eines akustischen Signals in das Teilrohr (102) bereitzustellen, und um an zumindest einem der axial beabstandeten Orte (104A, 104B) einen Lagerflächenabschnitt der bohrungsdefinierenden Oberfläche (135) des monolithisch hergestellten Teilrohrs (102), das eine axial zugewandte, ringförmige Lagerfläche (138A) umfasst, bereitzustellen.

12. Verfahren nach Anspruch 11, wobei das Verfahren ein Verbinden des Spannrings (106) mit der bohrungsdefinierenden Oberfläche (135) umfasst, um gegen das erste axiale Ende der Wandlerhalteanordnung (104) zu drücken, wobei die Verbindung des Spannrings (106) mit der bohrungsdefinierenden Oberfläche (135) eine einstellbare Verbindung umfasst, wobei der Spannring (106) relativ zu dem Teilrohr (102) axial beweglich ist, wenn er mit diesem verbunden ist, und wobei das Verfahren das Einstellen einer Kraft umfasst, mit der der Spannring (106) gegen das erste axiale Ende der Wandlerhalteanordnung (104) drückt, indem die einstellbare Verbindung eingestellt und die Spannring (106) axial relativ zu dem Teilrohr (102) bewegt wird.

## Revendications

1. Appareil permettant de monter un ou plusieurs transducteur sur une tige de forage comprenant :
une tige auxiliaire (102) comprenant une surface de délimitation de trou (135) délimitant un trou orienté axialement (134) qui la traverse, un connecteur (130) à une première extrémité axiale (102A), et un connecteur (132) à une seconde extrémité axiale (102B), au moins l'un des connecteurs (130, 132) pouvant être connecté à la tige de forage ; et
un ensemble de retenue de transducteur (104) comprenant un ou plusieurs transducteurs (516), l'ensemble de retenue de transducteur (104) étant inséré fonctionnellement dans le trou de la tige auxiliaire (102) à partir d'une extrémité parmi les première et seconde extrémités axiales (102A, 102B) et monté à l'intérieur du trou (134) de la tige auxiliaire (102) pour fournir un contact étroit qui facilite la communication acoustique entre le ou les transducteurs (516) et la tige auxiliaire (102) ;
dans lequel la tige auxiliaire (102) est fabriquée de manière monolithique ;
dans lequel le contact étroit qui facilite la communication acoustique entre le ou les transducteurs (516) et la tige auxiliaire (102) comprend l'ensemble de retenue de transducteur (104) en appui directement ou indirectement sur la surface de délimitation de trou (135) de la tige auxiliaire fabriquée de manière monolithique (102) à au moins deux emplacements séparés (104A, 104B) espacés axialement, situés à des première et seconde extrémités axiales en regard (104, 104B) de l'ensemble de retenue de transducteur (104), le ou les transducteurs (516) étant situés entre les deux emplacements séparés (104A, 104B) espacés axialement, permettant de fournir, au niveau de chaque emplacement séparé (104A, 104B) espacé axialement, une connexion acoustique pour la communication d'un signal acoustique dans la tige auxiliaire (102), et, à au moins un des emplacements séparés (104, 104B) espacés axialement, une partie de surface de support de la surface de délimitation de trou (135) de la tige auxiliaire fabriquée de manière monolithique (102) comprenant une surface de support annulaire, faisant face axialement (138A) ;
dans lequel la surface de délimitation de trou (135) de la tige auxiliaire (102) comprend un dispositif d'arrêt (138) formé de manière à réduire une zone transversale du trou dans le voisinage du dispositif d'arrêt (138) par rapport à au moins une région du trou adjacente au dispositif d'arrêt (138) ;
dans lequel l'ensemble de retenue de transducteur (104) est monté à l'intérieur du trou de la tige auxiliaire (102) et l'appareil comprend un collier de serrage (106) situé dans le trou sur un premier côté axial de l'ensemble de retenue de transducteur (104) pour venir en appui contre la première extrémité axiale (104) de l'ensemble de retenue de transducteur (104) ; et
l'appareil comprenant un trou d'interconnexion (108) situé dans le trou sur un second côté axial de l'ensemble de retenue de transducteur (104) pour venir en appui contre la seconde extrémité axiale (104B) de l'ensemble de retenue de transducteur (104).

2. Appareil selon la revendication 1, dans lequel l'ensemble de retenue de transducteur (104) est monté à l'intérieur du trou de la tige auxiliaire (102) et dans lequel l'ensemble de retenue de transducteur (104) comprend une partie de collier de serrage.

3. Appareil selon la revendication 1, dans lequel le trou d'interconnexion (108) comprend une partie de mise en prise de tige auxiliaire (151) formée de manière à venir en appui contre le dispositif d'arrêt (138) et une partie de connecteur (149) pour la connexion à un logement d'électronique (110).

4. Appareil selon la revendication 1, dans lequel le trou d'interconnexion (108) comprend une surface radialement vers l'extérieur (153) qui, conjointement avec la surface de délimitation de trou (135) de la tige auxiliaire (102) délimitent au moins une partie d'un logement d'électronique (110) destinée à loger l'électronique.

5. Appareil selon la revendication 1 ou 2, dans lequel l'ensemble de retenue de transducteur (104) comprend une partie de trou d'interconnexion.

6. Appareil selon la revendication 5, dans lequel la partie de trou d'interconnexion comprend une partie de mise en prise de tige auxiliaire (151) formée de manière à venir en appui contre le dispositif d'arrêt (138) et une partie de connecteur (149) pour la connexion à un logement d'électronique (110).

7. Appareil selon la revendication 5, dans lequel la partie d'interconnexion comprend une surface radialement vers l'extérieur (153) qui, conjointement avec la surface de délimitation de trou (135) de la tige auxiliaire (102) délimitent au moins une partie d'un logement d'électronique (110) destinée à loger l'électronique.

8. Appareil selon la revendication 1, dans lequel le collier de serrage (106) est relié à la surface de délimitation de trou (135) pour venir en appui contre la première extrémité axiale (104A) de l'ensemble de retenue de transducteur (104) ; dans lequel la liaison du collier de serrage (106) à la surface de délimitation de trou (135) comprend une liaison réglable, le collier de serrage (106) pouvant se déplacer axialement par rapport à la tige auxiliaire (102) lorsqu'il est relié à cette dernière pour régler une force avec laquelle le collier de serrage (106) vient en appui contre la première extrémité axiale (104) de l'ensemble de retenue de transducteur (104) ; et l'appareil (100) comprenant un trou d'interconnexion (108) situé dans le trou sur un second côté axiale de l'ensemble de retenue de transducteur (104) pour venir en appui contre une seconde extrémité axiale de l'ensemble de retenue de transducteur (104) et contre le dispositif d'arrêt (138) et dans lequel le collier de serrage (106) est relié de manière réglable à la surface de délimitation de trou (135) pour le déplacement réglable axial par rapport à la tige auxiliaire (102) et pour un réglage correspondant d'une force avec laquelle le collier de serrage (106) vient en appui contre la première extrémité axiale (104A) de l'ensemble de retenue de transducteur (104).

9. Appareil selon l'une des revendications 1 à 8 dans lequel l'ensemble de retenue de transducteur (104) comprend :
un support de transducteur (142, 242) ;
un ou plusieurs ensembles transducteurs (118), chaque ensemble transducteur comprenant une pluralité de transducteurs (516) ;
le support de transducteur (142, 242) comprenant un ou plusieurs éléments de montage (159) permettant de retenir un ou plusieurs ensembles transducteurs (118) ;
dans lequel le ou les éléments de montage (159) comprend :
- un premier bord (158) comprenant une première surface de bord (158A) qui fait face en règle générale à la seconde extrémité axiale (102B) de la tige auxiliaire (102) pour venir en contact avec les premières extrémités axiales (505A) du ou des ensembles transducteurs (118) ; et
- un second bord (160) espacé axialement du premier bord (158), le second bord (160) comprenant une seconde surface de bord (160A) qui fait face en règle générale à la première extrémité axiale (102A) de la tige auxiliaire (102) pour venir en contact avec les secondes extrémités axiales (505B) du ou des ensembles transducteurs (118) ;
dans lequel le contact entre les première et seconde surfaces de bord (158A, 160A) et les première et seconde extrémités axiales (505A, 505B) du ou des ensembles transducteurs (118) retient les ensembles transducteurs (118) sur le support de transducteur (142).

10. Utilisation de l'appareil selon l'une quelconque des revendications 1 à 9 pour la communication acoustique le long de la tige de forage.

11. Procédé de montage d'un ou de plusieurs transducteurs à une tige de forage pour la communication acoustique le long de la tige de forage, le procédé consistant à :
utiliser une tige auxiliaire (102) comprenant une surface de délimitation de trou (135) délimitant un trou orienté axialement (134) qui la traverse, un connecteur (130) à une première extrémité axiale (120A), et un connecteur (132) à une seconde extrémité axiale (102B), au moins l'un des connecteurs (130, 132) pouvant être connecté à la tige de forage ;
donner une forme à la surface de délimitation de trou (135) de la tige auxiliaire (102) de manière à fournir un dispositif d'arrêt annulaire (138) formé de manière à réduire une zone transversale du trou dans le voisinage du dispositif d'arrêt (138) par rapport à au moins une région du trou adjacente au dispositif d'arrêt (138) ;
utiliser un ensemble de retenue de transducteur (104) comprenant un ou plusieurs transducteurs (516) ;
insérer l'ensemble de retenue de transducteur (104) dans le trou de la tige auxiliaire (102) à partir d'une extrémité parmi la première et la seconde extrémité (102A, 102B) ; et
monter l'ensemble de retenue de transducteur (104) dans l'alésage de la tige auxiliaire (102) pour fournir un contact étroit qui facilite la communication acoustique entre le ou les transducteurs (516) et la tige auxiliaire (102) ;
insérer un collier de serrage (106) dans l'alésage à partir de la première extrémité axiale (102A) de la tige auxiliaire (102) et sur un premier côté axial de l'ensemble de retenue de transducteur (104) pour venir en appui contre une première extrémité axiale (104A) de l'ensemble de retenue de transducteur (104) ; et
insérer un trou d'interconnexion (108) dans l'alésage à partir de la première extrémité axiale de la tige auxiliaire (102) et sur un second côté axial de l'ensemble de retenue de transducteur (104) pour entrer en contact avec la surface de délimitation de trou (135) et venir en appui contre une seconde extrémité axiale (104B) de l'ensemble de retenue de transducteur (104),
dans lequel la tige auxiliaire (102) est fabriquée de manière monolithique, et
dans lequel le montage de l'ensemble de retenue de transducteur (104) dans l'alésage de la tige auxiliaire (102) pour fournir le contact étroit comprend l'ensemble de retenue de transducteur (104) en appui directement ou indirectement sur la surface de délimitation de trou (135) de la tige auxiliaire fabriquée de manière monolithique (102) à au moins deux emplacements séparés (104A, 104B) espacés axialement, situés à des première et seconde extrémités axiales en regard (104A, 104B) de l'ensemble de retenue de transducteur (104), respectivement, le ou les transducteurs (516) étant situés entre les deux emplacements séparés (104A, 104B) espacés axialement, permettant de fournir, au niveau de chaque emplacement séparé (104A, 104B) espacé axialement, une connexion acoustique pour la communication d'un signal acoustique dans la tige auxiliaire (102), et, à au moins un des emplacements séparés (104A, 104B) espacés axialement, une partie de surface de support de la surface de délimitation de trou de forage (135) de la tige auxiliaire fabriquée de manière monolithique (102) comprenant une surface de support annulaire, faisant face axialement (138A).

12. Procédé selon la revendication 11 consistant à relier le collier de serrage (106) à la surface de délimitation de trou (135) pour venir en appui contre la première extrémité axiale de l'ensemble de retenue de transducteur (104), dans lequel la liaison du collier de serrage (106) à la surface de délimitation de trou (135) comprend une liaison réglable, le collier de serrage (106) pouvant se déplacer axialement par rapport à la tige auxiliaire (102) lorsqu'il est relié à cette dernière et le procédé consistant à régler une force avec laquelle le collier de serrage (106) vient en appui contre la première extrémité axiale de l'ensemble de retenue de transducteur (104) par réglage de la liaison réglage et par déplacement du collier de serrage (106) axialement par rapport à la tige auxiliaire (102).
